# EUROPÄISCHE PATENTANMELDUNG

(11) **EP 1 724 103 A1**
(43) Veröffentlichungstag der Anmeldung: **22.11.2006**
(21) Anmeldenummer: 06009220.2
(22) Anmeldetag: 04.05.2006
(51) Int. Cl.: B32B 5/00, F16S 5/00

(54) **Baueinheit in Form eines Hohlraumformteils und deren Verwendung**

(30) Priorität: 10.05.2005 DE 202005007647 U; 10.11.2005 DE 102005054063; 23.12.2005 DE 102005062351
(71) Anmelder: SKS Sitzkomponenten GmbH & Co. KG, 41065 Mönchengladbach (DE)
(72) Erfinder: Salzmann, Oliver, 47877 Willich (DE); Franzke, Guido, 48336 Sassenberg (DE)
(74) Vertreter: Gesthuysen, von Rohr & Eggert

(57) **Zusammenfassung**

Beschrieben sind eine Baueinheit (1) aus mindestens zwei mindestens einen Hohlraum (4) ausbildenden Formteilen (2a, 2b), wobei zumindest das erste Formteil (2a) einen mehrschichtigen Aufbau (5a) mit einem einer Trägerschicht (3a) zugeordneten, insbesondere textilen Flächenmaterial (6a) aufweist und das Flächenmaterial (6a) auf der dem Hohlraum (4) abgewandten Seite der Trägerschicht (3a) auf die Trägerschicht (3a) auflaminiert ist, sowie Einrichtungsgegenstände, welche die Baueinheit (1) aufweisen, und ein Verfahren zur Herstellung der Baueinheit (1).

## Beschreibung

Die vorliegende Erfindung betrifft eine Baueinheit nach dem Oberbegriff von Anspruch 1 sowie deren Verwendung, insbesondere zur Herstellung von Einrichtungsgegenständen, insbesondere Möbeln, vorzugsweise Sitzmöbeln, dekorativen Elementen, Hohlraumkanälen und dergleichen, sowie die damit hergestellten Gegenstände der vorgenannten Art als solche. Schließlich betrifft die vorliegende Erfindung ein Verfahren zur Herstellung einer solchen Baueinheit.

Aus dem Stand der Technik sind dreidimensionale Hohlraumformteile bekannt, welche aus plattenförmigen Ausgangsmaterialien hergestellt werden, wobei die plattenförmigen Ausgangsmaterialien im allgemeinen einschichtige Platten bzw. Folien aus einem thermoplastischen Material, welches beispielsweise mittels Thermoformen umgeformt werden kann, darstellen. Zur Herstellung dieser einfachen, insbesondere aus einschichtigen Formteilen bestehenden Hohlformteile wird im Stand der Technik das sogenannte Twin-Sheet-Verfahren - synonym auch als Twin-Sheet-Umformen bzw. Twin-Sheet-Thermoformen bezeichnet - eingesetzt, welches eine spezielle Verfahrensart des Thermoformens (Warmformens) darstellt. Im Rahmen des Twin-Sheet-Verfahrens werden zwei plattenförmige, im allgemeinen thermoplastische Ausgangsmaterialien mit einem einschichtigen Aufbau zunächst auf Temperaturen oberhalb ihres Erweichungspunktes erwärmt und anschließend in paralleler Anordnung in eine zweigeteilte Form geführt, dann durch Druck- bzw. Unterdruckbeaufschlagung in Formteile überführt und schließlich zu einem Hohlformkörper verbunden, bei welchem die aus den plattenförmigen Ausgangsmaterialien umgeformten Strukturen fest miteinander verbunden werden und einen Hohlraum umschließen. Auf diese Weise werden im Stand der Technik einfache technische Gegenstände, beispielsweise Hohlraum-Profilteile, Wasserbehältnisse bzw. Benzintanks, hergestellt. Da es im Stand der Technik - wie zuvor angeführt - ausschließlich vorgesehen ist, einschichtige thermoplastische Materialien auf diese Weise zu verarbeiten, ist es beispielsweise nicht möglich, Produkte mit besonderen Eigenschaften, wie speziellen Oberflächeneigenschaften, herzustellen.

Derartige einschichtige Hohlkörperformteile eignen sich somit nicht für den Einsatz z. B. in Möbeln, bei denen neben einer gewissen Strukturfestigkeit gerade auch spezielle Oberflächeneigenschaften (z. B. optische oder haptische Eigenschaften) und anatomische bzw. ergonomische Eigenschaften (Sitzkomfort bei Sitzmöbeln) eine bedeutende Rolle spielen.

In diesem Zusammenhang ist es in bezug auf die Herstellung von mehrschichtigen, eine thermoplastische Komponente bzw. Schicht enthaltenden Formteilen im Stand der Technik vorgesehen, daß ein umformbares Material, welches im allgemeinen plattenförmig ausgebildet ist, **nach** Überführung in eine dreidimensionale Form bzw. Struktur mit einer weiteren Schicht, beispielsweise einem textilen Flächengebilde oder dergleichen, beschichtet wird bzw. diese weitere Schicht auf das bereits fertig geformte Formteil aufgebracht und dauerhaft hiermit, beispielsweise mittels einer Verklebung, verbunden wird. Nachteilig hierbei ist jedoch, daß das Flächenmaterial erst **nach** der Umformung aufgebracht wird, weil dies die Verklebung erschwert, und daß die hohe Anzahl an Verfahrensschritten arbeits- und kostenintensiver ist. Insbesondere ist es oftmals nicht möglich, das textile Flächenmaterial ganzflächig mit dem umgeformten Material zu verbinden; denn insbesondere im Bereich starker Umformungen (z. B. bei starken Biegungen, Ein- bzw. Auswölbungen und dergleichen) tritt eine starke Dehn- bzw. Stauchbeanspruchung des textilen Flächenmaterials auf, was oftmals zu einer Ablösung bzw. Delaminierung des Flächenmaterials führen kann. Darüber hinaus tritt in bezug auf das nachträgliche Aufbringen einer Schicht auf die dreidimensionale Struktur häufig eine unerwünschte Faltenbildung auf. Ein weiterer Nachteil bei diesem Verfahren ist darin zu sehen, daß aufgrund der nachträglichen Fixierung des textilen Flächenmaterials auf der dreidimensionalen Struktur eine ungleichmäßige Dehnbeanspruchung des textilen Flächenmaterials resultieren kann, was zu einem uneinheitlichen Oberflächenbild führt. Schließlich können die durch das nachträgliche, mitunter ungleichmäßige "Aufziehen" des textilen Flächenmaterials auf die Trägerstruktur resultierenden Poren bzw. uneinheitlichen Rückstellkräfte zu einer nachträglichen Verformung des Formteils führen.

Vor diesem technischen Hintergrund besteht nunmehr die Aufgabe der vorliegenden Erfindung darin, eine Baueinheit bereitzustellen, welche die zuvor geschilderten Nachteile des Standes der Technik zumindest teilweise vermeidet oder aber wenigstens abschwächt. Insbesondere soll eine einen Hohlraum aufweisende Baueinheit bereitgestellt werden, welche zumindest ein insbesondere textiles Flächenmaterial auf mindestens einem Träger umfaßt und welche sich insbesondere zur Verwendung für Einrichtungsgegenstände, wie Möbel und dergleichen, eignen soll, d. h. sowohl ergonomisch wie optisch verbesserte Eigenschaften aufweist. Dabei sollen in bezug auf die Baueinheit starke Biegungen, Ein- und Ausbuchtungen und dergleichen realisiert werden können, ohne daß Delaminierungen oder Faltenbildungen in bezug auf die einzelnen Schichten der Baueinheit auftreten. Schließlich soll das resultierende Formteil einerseits selbsttragend und in hohem Maße formstabil sein und andererseits nachgiebige bzw. reversibel verformbare Bereiche aufweisen, so daß es sich insbesondere zur Verwendung in Möbeln, wie beispielsweise Sitzmöbeln, eignet.

Zur Lösung der zuvor geschilderten Aufgabenstellung schlägt die vorliegende Erfindung eine Baueinheit gemäß Anspruch 1 bzw. 8 bzw. 10 vor. Weitere, vorteilhafte Ausgestaltungen sind Gegenstand der jeweiligen Unteransprüche.

Weiterhin sind Gegenstand der vorliegenden Erfindung die Verwendung der erfindungsgemäßen Baueinheit zur Herstellung von Einrichtungsgegenständen, insbesondere Möbeln, vorzugsweise Sitzmöbeln, dekorativen Elementen, Hohlraumkanälen und dergleichen, gemäß Anspruch 11 sowie Einrichtungsgegenstände, insbesondere Möbel, vorzugsweise Sitzmöbel, dekorative Elementen, Hohlraumkanäle und dergleichen, gemäß Anspruch 12.

Schließlich ist Gegenstand der vorliegenden Erfindung ein Verfahren zur Herstellung der erfindungsgemäßen Baueinheit gemäß Anspruch 13 bzw. 23. Weitere, vorteilhafte Ausgestaltungen des erfindungsgemäßen Verfahrens sind Gegenstand der Verfahrensunteransprüche.

Ein erster Gegenstand der vorliegenden Erfindung ist somit eine Baueinheit, welche sich insbesondere für die Herstellung von Möbeln, dekorativen Elementen, Hohlraumkanälen und dergleichen eignet und welche ein erstes Formteil mit einer Trägerschicht und ein zweites Formteil mit einer Trägerschicht umfaßt, wobei das erste Formteil und das zweite Formteil mindestens einen Hohlraum ausbilden. Die erfindungsgemäße Baueinheit zeichnet sich insbesondere dadurch aus, daß das erste Formteil einen mehrschichtigen Aufbau aufweist, wobei das erste Formteil ein der Trägerschicht zugeordnetes, insbesondere textiles Flächenmaterial aufweist. Dabei ist es erfindungsgemäß vorgesehen, daß das Flächenmaterial auf der dem Hohlraum abgewandten Seite der Trägerschicht auf die Trägerschicht auflaminiert ist. Hierdurch ist es insbesondere möglich, eine erfindungsgemäße Baueinheit bereitzustellen, welche über besondere Materialeigenschaften verfügt, wie speziellen Oberflächeneigenschaften und einer reversiblen Verformbarkeit, so daß sich die erfindungsgemäße Baueinheit insbesondere für die Herstellung von Einrichtungsgegenständen, insbesondere Möbel, vorzugsweise Sitzmöbel, dekorativen Elementen, Hohlraumkanälen und dergleichen, eignet. Dabei ist es im Rahmen der vorliegenden Erfindung möglich, in bezug auf die Baueinheit nach der Erfindung starke Biegungen bzw. Umformungen zu realisieren, wodurch individuelle, an die jeweiligen Anforderungen - beispielsweise anatomische Formgebung bei gleichzeitig hoher kraftmäßiger Belastungsfähigkeit in bezug auf Sitzmöbel - angepaßte Formen bzw. Strukturen geschaffen werden können.

Wie bereits das erste Formteil, so kann auch das zweite Formteil einen mehrschichtigen Aufbau mit einer vorzugsweise thermoplastischen Trägerschicht und einem der Trägerschicht zugeordneten insbesondere textilen Flächenmaterial aufweisen, wobei das Flächenmaterial des zweiten Formteils gleicherma-βen auf der dem Hohlraum abgewandten Seite der Trägerschicht auf die Trägerschicht auflaminiert ist, so daß eine einheitliche Oberflächenbeschaffenheit bzw. -struktur für die gesamte erfindungsgemäße Baueinheit realisiert werden kann.

Wie nachfolgend noch ausführlich geschildert, sind die die erfindungsgemäße Baueinheit bildenden Formteile nicht auf eine zuvor beschriebene Zwei-Schicht-Struktur begrenzt. Vielmehr ist es gleichermaßen möglich, daß zusätzlich ein Träger vorgesehen ist, wobei der optionale Träger vorzugsweise auf der dem Hohlraum zugewandten Seite mit der Trägerschicht verbunden ist, so daß gewissermaßen eine sogenannte "Sandwichstruktur" resultiert, bei welcher die Trägerschicht sozusagen die Kemschicht des Schicht- bzw. Kompositmaterials bildet. Hierdurch sind besonders formstabile Strukturen bzw. Formen realisierbar, die auch einer hohen kraftmäßigen Belastung standhalten können. Durch eine gezielte Kombination beispielsweise eines zweischichtigen Formteils mit einer verformbaren Trägerschicht und eines dreischichtigen Formteils mit einem massiven Träger können die zuvor genannten Eigenschaften - zweckangepaßte Verformbarkeit und hohe kraftmäßige Belastbarkeit - miteinander kombiniert werden.

Eine grundlegende Idee der vorliegenden Erfindung ist insbesondere darin zu sehen, daß als Ausgangsmaterialien für die erfindungsgemäße Baueinheit bereits fertiggestellte, sämtliche Komponenten bzw. Schichten enthaltende, mehrschichtige plattenförmige Werkstoffteile, welche insbesondere als Verbund ausgebildet sind, eingesetzt werden, welche vorzugsweise in einem speziellen Formgebungsverfahren, besonders bevorzugt in einem sogenannten Twin-Sheet-Verfahren, zu miteinander verbundenen Formteilen zum Erhalt der erfindungsgemäßen Baueinheit verarbeitet werden können. Mit anderen Worten zeichnet sich die vorliegende Erfindung insbesondere dadurch aus, daß bereits vor bzw. bei dem Schritt der Formgebung ein stabiles Verbundmaterial mit dauerhaft und flächig miteinander verbundenen Schichten bereitgestellt wird, so daß ein nachträgliches Aufbringen von Schichten nach dem Formgebungsverfahren, insbesondere nach dem Twin-Sheet-Verfahren, vollständig entfallen kann. Hierdurch wird es erfindungsgemäß ermöglicht, die erfindungsgemäße Baueinheit mit besonders stark und unterschiedlich voneinander ausgeformten Bereichen auszustatten, ohne daß beispielsweise das auf die Trägerschicht aufgebrachte Flächenmaterial delaminiert bzw. ohne daß es zur Bildung von Falten, Blasen oder dergleichen kommt. Eine weitere grundlegende Idee der vorliegenden Erfindung ist zudem darin zu sehen, das aus dem Stand der Technik bekannte Twin-Sheet-Verfahren durch eine gezielte Auswahl der Ausgangsmaterialien einerseits sowie eine spezielle Anpassung der Verfahrensparameter andererseits für die Herstellung von mehrschichtigen Baueinheiten einzusetzen. Dabei können mit Hilfe des erfindungsgemäßen Verfahrens auf einfache Weise arbeits- und kostengünstig endfertige Baueinheiten bereitgestellt werden, welche den hohen Anforderungen im Bereich der Möbelindustrie - hohe kraftmäßige Belastbarkeit, anatomische Anpassung sowie individuelle Strukturgebung mit ansprechender Optik bzw. Haptik - gerecht werden.

Erfindungsgemäß wird unter dem Begriff "dreidimensional" (z. B. dreidimensionale Form bzw. Struktur in bezug auf die erfindungsgemäße Baueinheit bzw. auf das Formteil insbesondere) eine derartige Struktur verstanden, die von der ebenen bzw. planaren Struktur abweichend ausgeformte bzw. räumliche Bereiche aufweist, zu denen beispielsweise Ein- bzw. Auswölbungen, Vertiefungen, Ausbuchtungen, Biegungen und dergleichen zu zählen sind.

Weiterhin wird erfindungsgemäß unter dem Begriff "plattenförmig" (z. B. plattenförmiges Werkstoffteil) eine zumindest im wesentlichen ebene bzw. planare Form bzw. Struktur beispielsweise des für die erfindungsgemäße Baueinheit verwendeten Werkstoffteils verstanden, wobei die Dicke des Werkstoffteils zumindest im wesentlichen über seine Fläche konstant ist. Sofern anwendungsbezogen erwünscht, können die einzelnen Schichten flächenbezogen jedoch auch unterschiedliche Dicken aufweisen, beispielsweise um eine weiter optimierte anatomische Form bei Sitzmöbeln zu realisieren.

Der Ausdruck "zugeordnet" (z. B. ein der Trägerschicht zugeordnetes Flächenmaterial) ist erfindungsgemäß derart zu verstehen, daß einerseits die Möglichkeit besteht, daß das Flächenmaterial unmittelbar, d. h. direkt auf der Trägerschicht auflaminiert ist, andererseits dieser Begriff aber gleichermaßen auch eine mittelbare Zuordnung des Flächenmaterials in bezug auf die Trägerschicht umfassen kann, bei welcher beispielsweise zwischen dem Flächenmaterial und der Trägerschicht mindestens eine weitere Zwischenschicht, beispielsweise eine weitere, von der ersten Trägerschicht abweichende Trägerschicht, angeordnet ist.

Weiterhin ist der Begriff "formstabil" (z. B. formstabile Baueinheit bzw. Formteil) erfindungsgemäß so zu verstehen, daß die erfindungsgemäße Baueinheit den bei der jeweiligen Anwendung, beispielsweise im Rahmen der Herstellung von Sitzmöbeln, resultierenden Belastungen widerstehen kann bzw. diese aufzunehmen imstande ist, wobei eine reversible Verformung von dieser Definition umfaßt ist.

Im Rahmen der vorliegenden Erfindung ist der Begriff "umformbar" (z. B. umformbarer Träger bzw. umformbares Werkstoffteil) so zu verstehen, daß der Träger bzw. das Werkstoffteil unter Beibehaltung der Masse des Schichtzusammenhangs zumindest im wesentlichen irreversibel in eine andere Form bzw. Struktur überführt werden kann.

In diesem Zusammenhang ist der Begriff "thermoformbar" (z. B. thermoformbares Werkstoffteil) so zu verstehen, daß beispielsweise das zur Herstellung der Formteile bzw. der erfindungsgemäßen Baueinheit verwendete Werkstoffteil unter Erwärmung auf einen Temperaturbereich oberhalb des Erweichungspunktes insbesondere mittels Warmformen umgeformt werden kann. Im Rahmen der vorliegenden Erfindung wird als Warmformverfahren insbesondere das sogenannte Twin-Sheet-Verfahren eingesetzt.

Schließlich ist unter dem Begriff "Auflaminieren" bzw. "Laminieren" (z. B. Auflaminieren des Flächenmaterials auf die Trägerschicht) ein insbesondere flächiges Verbinden bzw. Verkleben der jeweiligen Schichten der erfindungsgemäßen Baueinheit zu verstehen, wobei das Verbinden der einzelnen Schichten beispielsweise mittels dem Fachmann wohlbekannter Verfahren, insbesondere Kaschierverfahren, im allgemeinen mittels geeigneter Laminier- bzw. Kaschiermittel, wie Klebstoffe, Schmelzklebstoffe, Schmelzkleberwebs und dergleichen, erfolgen kann. In diesem Zusammenhang sollte die flächige Verbindung bzw. Laminierung oder Kaschierung der einzelnen Schichten vorzugsweise vollflächig erfolgen, d. h. das Kaschiermittel ist vorzugsweise kontinuierlich aufgetragen. Gleichermaßen ist jedoch auch eine diskontinuierliche Verbindung möglich, beispielsweise durch einen punktförmigen oder rasterförmigen Auftrag des Klebstoffs. Gemäß einer besonderen Ausgestaltung können die jeweiligen Schichten der erfindungsgemäßen Baueinheit durch dem Fachmann an sich bekannte Flammkaschierverfahren miteinander verbunden werden, wobei insbesondere gewährleistet sein sollte, daß zumindest eine Schicht über hitzeklebrige Eigenschaften verfiigt.

Schließlich ist der Begriff "Hohlraum" (z. B. ein von dem ersten Formteil und dem zweiten Formteil ausgebildeter Hohlraum) derart zu verstehen, daß das erste Formteil und das zweite Formteil der erfindungsgemäßen Baueinheit derart angeordnet bzw. verbunden sind, daß sie den resultierenden Hohlraum zumindest im wesentlichen vollständig umschließen. Diesbezüglich kann es erfindungsgemäß vorgesehen sein, daß der Hohlraum vollständig, d. h. ohne Durchbrechungen und dergleichen von den Formteilen umschlossen ist. Es liegt jedoch gleichermaßen im Rahmen der vorliegenden Erfindung, wenn der Hohlraum nur teilweise von den Formteilen umschlossen ist. So ist es beispielsweise möglich, daß im Bereich der Verbindungsstellen der Formteile Kanäle, Durchbrechungen oder dergleichen ausgebildet sind, so daß der Hohlraum gewissermaßen mit Öffnungen versehen ist. Durch diese Öffnungen ist beispielsweise - wie nachfolgend noch ausführlich geschildert - eine Druckbeaufschlagung während der Herstellung der erfindungsgemäßen Baueinheit bzw. ein Befüllen mit Füllstoffen während oder nach der Herstellung der erfindungsgemäßen Baueinheit möglich. Der Begriff Hohlraum umfaßt somit auch einen mit Füllstoffen ausgefüllten oder teilweise befüllten (Hohl-)Raum. Zudem ist die Anzahl der durch die Formteile ausgebildeten Hohlräume nicht limitiert. So ist es möglich, daß die Formteile eine Mehrzahl an Hohlräumen, beispielsweise eins, zwei, drei, vier etc. Hohlräume, ausbilden.

Weitere Vorteile, Merkmale, Eigenschaften und Aspekte der vorliegenden Erfindung ergeben sich aus der nachfolgenden Beschreibung von bevorzugten Ausführungsformen anhand der Figuren. Es zeigt:
- Fig. 1: einen schematischen Querschnitt der erfindungsgemäßen Baueinheit gemäß einer erfindungsgemäß bevorzugten Ausführungsform, wobei
- Fig. 1A: einen schematischen Querschnitt des ersten Formteils gemäß einer ersten, erfindungsgemäß bevorzugten Ausführungsform mit einem Zwei-Schicht-Aufbau darstellt;
- Fig. 1B: einen schematischen Querschnitt des ersten Formteils gemäß einer alternativen Ausführungsform mit einem Drei-Schicht-Aufbau darstellt;
- Fig. 1C: einen schematischen Querschnitt des zweiten Formteils gemäß einer erfindungsgemäß bevorzugten Ausführungsform mit einem Zwei-Schicht-Aufbau darstellt;
- Fig. ID: einen schematischen Querschnitt des zweiten Formteils gemäß einer alternativen, erfindungsgemäß bevorzugten Ausführungsform mit einem Drei-Schicht-Aufbau darstellt; und
- Fig. 2: eine schematische Darstellung eines erfindungsgemäßen Verfahrensablaufs mit den jeweiligen Verfahrensschritten (Fig. 2A bis Fig. 2G).

In den Figuren werden für gleiche oder ähnliche Teile dieselben Bezugszeichen verwendet, wobei entsprechende Eigenschaften und Vorteile erreicht werden, auch wenn eine wiederholte Beschreibung aus Vereinfachungsgründen weggelassen ist.

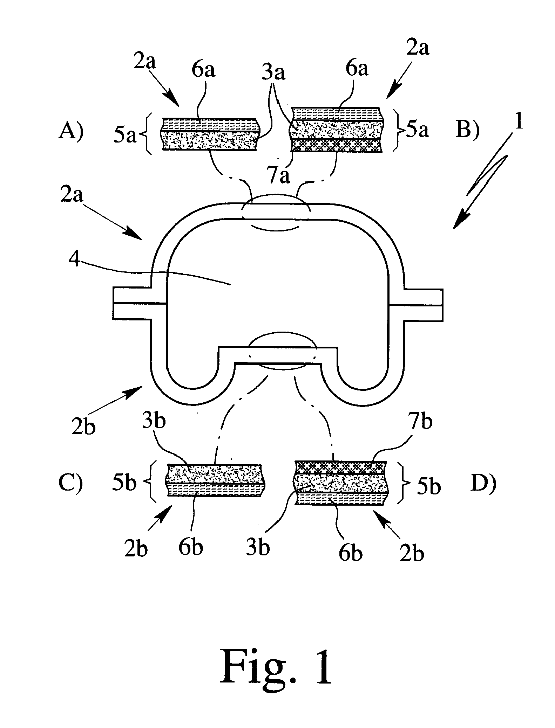

Fig. 1 zeigt eine erfindungsgemäße Baueinheit 1, welche ein erstes Formteil 2a mit einer Trägerschicht 3a und ein zweites Formteil 2b mit einer Trägerschicht 3b umfaßt. Erfindungsgemäß bilden das erste Formteil 2a und das zweite Formteil 2b mindestens einen Hohlraum 4 aus. Wie in Fig. 1 dargestellt, weist das erste Formteil 2a einen mehrschichtigen Aufbau 5a auf, wobei das erste Formteil 2a ein der Trägerschicht 3a zugeordnetes, insbesondere textiles Flächenmaterial 6a aufweist. Wie die Fig. 1 weiter verdeutlicht, ist das Flächenmaterial 6a auf der dem Hohlraum 4 abgewandten Seite der Trägerschicht 3a auf die Trägerschicht 3a auflaminiert. Mit anderen Worten ist es erfindungsgemäß vorgesehen, daß das Flächenmaterial 6a gewissermaßen auf der Außenseite der erfindungsgemäßen Baueinheit 1 angeordnet ist und somit im Gebrauchszustand der erfindungsgemäßen Baueinheit 1 deren nach außen gerichtete Oberfläche bildet.

Fig. 1 zeigt somit eine erfindungsgemäße Baueinheit 1, welche aus zwei Formteilen 2a, 2b gebildet ist, welche fest bzw. dauerhaft derart miteinander verbunden sind, daß sie einen Hohlraum 4 der zuvor definierten Art ausbilden. Folglich stellt die erfindungsgemäße Baueinheit 1 gewissermaßen einen Hohlkörper dar.

Wie Fig. 1 weiter verdeutlicht, zeichnet sich die erfindungsgemäße Baueinheit 1 dadurch aus, daß sie eine dreidimensionale Struktur gemäß der vorgenannten Definition aufweist, wobei durch eine gezielt einstellbare und zweckgerichtete Ausbildung der dreidimensionalen Form bzw. Struktur eine Vielzahl verschiedenartiger Hohlkörper realisiert werden können, so daß die erfindungsgemäße Baueinheit 1 für zahlreiche Verwendungen, beispielsweise als Sitz- und/oder Rückenteil eines Sitzmöbels, geeignet ist.

Zum Erhalt der dreidimensionalen Struktur der erfindungsgemäßen Baueinheit 1 kann es - wie Fig. 1 verdeutlicht - vorgesehen sein, daß mindestens eines der Formteile 2a bzw. 2b eine dreidimensionale Form bzw. Struktur aufweist. Erfindungsgemäß bevorzugt weisen sowohl das erste Formteil 2a als auch das zweite Formteil 2b eine dreidimensionale Form bzw. Struktur auf. Gleichermaßen ist es aber auch möglich, daß das erste Formteil 2a oder das zweite Formteil 2b eine plattenförmige Form bzw. Struktur im vorgenannten Sinne aufweist.

Weiterhin ist es erfindungsgemäß bevorzugt - wie die Fig. 1 weiterhin zeigt - daß die Formteile 2a, 2b insbesondere abschnittsweise miteinander verbunden sind. Erfindungsgemäß ist es bevorzugt, daß - vor dem Hintergrund der Ausbildung eines Hohlraums - die Formteile 2a, 2b (beispielsweise an deren Randbereichen) stegförmig miteinander verbunden sind, wobei es erfindungsgemäß gleichermaßen möglich ist, die Formteile 2a, 2b in von den Randbereichen verschiedenen Bereichen, wie beispielsweise den zentralen Bereichen der Formteile 2a, 2b insbesondere stegförmig miteinander zu verbinden, wodurch mehrere Hohlräume realisierbar sind. Die insbesondere stegförmige Verbindung kann gleichermaßen Unterbrechungen bzw. Durchlässe und/oder Kanäle aufweisen, um eine Verbindung des Hohlraums 4 mit der äußeren Umgebung der erfindungsgemäßen Baueinheit 1 zu ermöglichen bzw. um gegebenenfalls mehrere Hohlräume 4 miteinander zu verbinden.

Das Verbinden der Formteile 2a, 2b kann beispielsweise durch Laminieren, Kaschieren bzw. Verkleben erfolgen, wobei die zuvor unter der Begriffsdefinition "Laminieren" genannten Klebstoffe verwendet werden können. Darüber hinaus können zur Verbindung der Formteile 2a, 2b zudem dem Fachmann als solche bekannte Kunststoffdispersionen, aber auch Reaktivklebstoffe, wie insbesondere polyurethanbasierte Ein- oder Zweikomponentensysteme, eingesetzt werden. Gleichermaßen ist es auch möglich, daß zumindest eines der Formteile 2a, 2b hitzeklebrig ausgebildet ist, so daß bei entsprechender Erwärmung der Formteile 2a, 2b eine dauerhafte Verbindung der beiden Formteile 2a, 2b resultiert. Im allgemeinen ist es erfindungsgemäß vorgesehen, daß das Verbinden der Formteile 2a, 2b während ihrer Herstellung bzw. während der Herstellung der erfindungsgemäßen Baueinheit 1 erfolgt, insbesondere im Rahmen des Twin-Sheet-Verfahrens. Erfindungsgemäß ist es vorzugsweise vorgesehen, daß die Verbindung bzw. Verklebung der Formteile 2a, 2b auf der dem Flächenmaterial 6a abgewandten Seite des Formteils 2a sowie auf der einem textilen Flächenmaterial 6b abgewandten Seite des Formteils 2b erfolgt.

Was die erfindungsgemäße Baueinheit 1 als solche anbelangt, so kann diese auch mehr als zwei Formteile 2a, 2b aufweisen. So liegt es im Rahmen der vorliegenden Erfindung, wenn die erfindungsgemäße Baueinheit 1 drei, vier, fünf oder mehr Formteile aufweist, welche zu der erfindungsgemäßen Baueinheit 1 in vorgenannter Weise angeordnet sind.

Was das erste Formteil 2a der erfindungsgemäßen Baueinheit 1 betrifft, so zeigt Fig. 1A beispielhaft eine erfindungsgemäß bevorzugte Ausfiihrungsform, wonach das Formteil 2a einen Verbund bzw. ein einstückig ausgebildetes Schichtmaterial aus zwei Schichten, nämlich der Trägerschicht 3a einerseits und dem Flächenmaterial 6a andererseits, darstellt. Die vorliegende Erfindung ist jedoch in keiner Weise auf diese Ausführungsform beschränkt.

So zeigt die Fig. 1B eine alternative erfindungsgemäße Ausführungsform, wonach das erste Formteil 2a zusätzlich einen insbesondere thermoplastischen Träger 7a aufweist. Dabei kann der Träger 7a vorzugsweise auf der dem Hohlraum 4 zugewandten Seite mit der Trägerschicht 3a insbesondere flächig verbunden sein. Gemäß dieser Ausführungsform handelt es sich bei der Trägerschicht 3a vorzugsweise um eine nachfolgend noch beschriebene Schaumstoffschicht, während es sich bei dem Träger 7a - wie nachfolgend noch beschrieben - um einen nichtgeschäumten, massiven thermoplastischen Träger handelt. Gemäß der Ausführungsform von Fig. 1B ist demnach das Flächenmaterial 6a in zuvor beschriebener Weise auf die Trägerschicht 3a auflaminiert, und die Trägerschicht 3a ist wiederum auf den Träger 7a auflaminiert. Alternativ kann der Träger 7a mit der Zwischenschicht 3a durch Aufflammen verbunden sein. Gleichermaßen ist es möglich, daß das Flächenmaterial 6a und/oder die Trägerschicht 3a und/oder der Träger 7a hitzeklebrig ausgebildet ist bzw. sind, so daß eine dauerhafte Verbindung durch ein entsprechendes Erwärmen und Zusammenfügen der jeweiligen Schichten erfolgen kann. Gemäß der Ausführungsform gemäß Fig. 1B resultiert somit ein Drei-Schicht-Material, welches gleichermaßen - wie das in Fig. 1A beschriebene, als Zwei-Schicht-Material ausgebildete Formteil 2a - nach Art eines Verbund- bzw.

Kompositmaterials ausgebildet ist. Gemäß der in Fig. 1B beschriebenen Ausführungsform ist der Träger 7a in bezug auf die erfindungsgemäße Baueinheit 1 gewissermaßen innenseitig, d. h. auf der dem Hohlraum 4 zugewandten bzw. auf der dem textilen Flächenmaterial 6a abgewandten Seite angeordnet.

Was das für die erfindungsgemäße Baueinheit 1 verwendete zweite Formteil 2b betrifft, so kann auch dieses - wie Fig. 1C sowie Fig. 1D zeigen - einen mehrschichtigen Aufbau 5b aufweisen, der beispielsweise aus einer Trägerschicht 3b und einem der Trägerschicht 3b zugeordneten textilen Flächenmaterial 6b besteht (Fig. 1C).

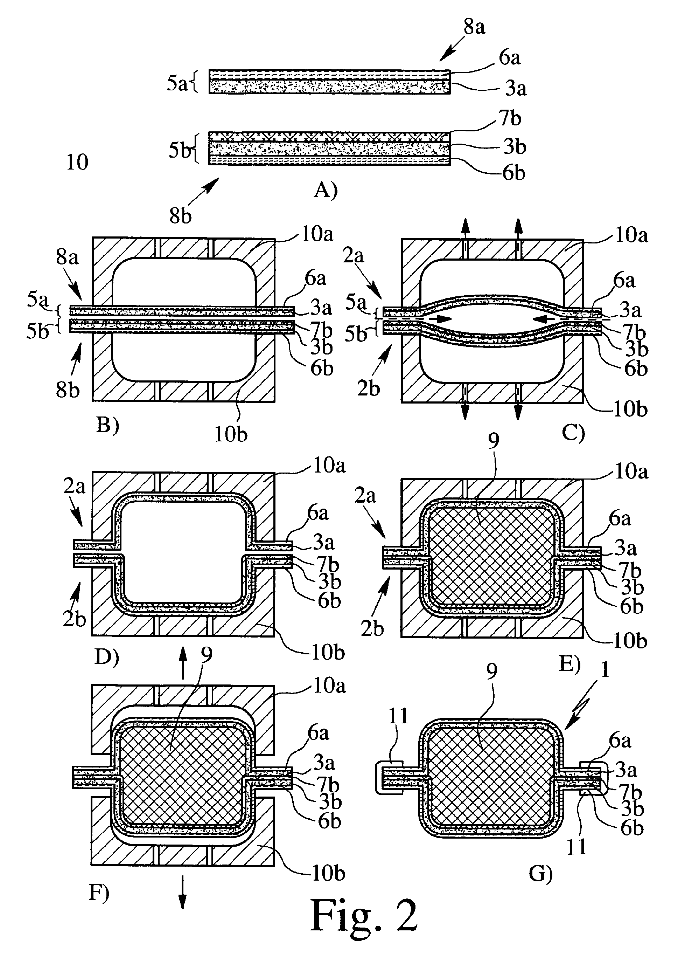

Auch das zweite Formteil 2b, welches für die erfindungsgemäße Baueinheit 1 eingesetzt wird, kann - wie der Fig. 2C zu entnehmen ist - als ein Zwei-Schicht-Material ausgebildet sein, wobei das zweite Formteil 2b dann ein der Trägerschicht 3b zugeordnetes, insbesondere textiles Flächenmaterial 6b aufweist. Auch in bezug auf das zweite Formteil 2b ist das Flächenmaterial 6b auf der dem Hohlraum 4 abgewandten Seite der Trägerschicht 3b auf die Trägerschicht 3b auflaminiert, so daß das Flächenmaterial 6b gleichermaßen - wie das Flächenmaterial 6a des ersten Formteils 2a - gewissermaßen außenseitig in bezug auf die erfindungsgemäße Baueinheit 1 angeordnet ist. Fig. 2D zeigt eine alternative erfindungsgemäße Ausführungsform, wonach das zweite Formteil 2b einen insbesondere thermoplastischen Träger 7b aufweist und somit als Drei-Schicht-Material ausgebildet ist. In diesem Fall ist der Träger 7b vorzugsweise auf der dem Hohlraum 4 zugewandten Seite - und somit gewissermaßen innenseitig in bezug auf die erfindungsgemäße Baueinheit 1 - mit der Trägerschicht 3b insbesondere flächig verbunden. Für weitere Ausfiihrungen betreffend die Trägerschicht 3b bzw. das Flächenmaterial 6b sowie den Träger 7b des zweiten Formteils 2b kann auf obige Ausführungen betreffend das erste Formteil 2a verwiesen werden, welche hier gleichermaßen gelten.

Mit anderen Worten betrifft die vorliegende Erfindung - wie in Fig. 1 gezeigt - eine Baueinheit 1, welche mindestens zwei Formteile 2a, 2b mit jeweils mehrschichtigem Aufbau 5a, 5b aufweist, wobei mindestens eine Komponente bzw. Schicht des ersten Formteils 2a und/oder des zweiten Formteils 2b eine umformbare, insbesondere thermoformbare Schicht darstellt, welche aus einem thermoplastischen Material besteht. Falls anwendungsbezogen erforderlich, kann eines der Formteile 2a bzw. 2b einschichtig ausgebildet sein, wobei das entsprechende Formteil dann beispielsweise nur das Flächenmaterial 6a, 6b oder die Trägerschicht 3a bzw. 3b oder den Träger 7a, 7b aufweist. Gleichermaßen ist es erfindungsgemäß möglich, daß die Trägerschicht 3a, 3b mehrere Einzelschichten umfaßt, die beispielsweise aus verschiedenen Schaumstoffmaterialien bestehen können, so daß auch ein vielschichtiger Aufbau 5a, 5b mit mehr als drei Schichten resultieren kann.

Eine Besonderheit der vorliegenden Erfindung ist darin zu sehen, daß die erfindungsgemäße Baueinheit 1 aus Formteilen 2a bzw. 2b besteht, welche wiederum aus plattenförmigen, umformbaren, insbesondere thermoformbaren Werkstoffteilen 8a bzw. 8b resultieren, wie in Fig. 2A dargestellt. Diesbezüglich weisen die gewissermaßen als Ausgangsmaterialien für die erfindungsgemäße Baueinheit 1 fungierenden plattenförmigen Werkstoffteile 8a bzw. 8b bereits denselben Schichtaufbau wie die resultierenden Formteile 2a bzw. 2b auf. Mit anderen Worten werden erfindungsgemäß bereits fertig ausgebildete bzw. fertig hergestellte Werkstoffteile 8a bzw. 8b eingesetzt, welche bereits sämtliche Komponenten bzw. Schichten des fertigen Endprodukts (d. h. die aus den verbundenen Formteilen 2a bzw. 2b resultierende erfindungsgemäße Baueinheit 1) aufweisen und welche in dieser bereits fertiggestellten Ausbildung in die Formteile 2a bzw. 2b zur Herstellung der erfindungsgemäßen endfertigen Baueinheit 1 umformbar sind. Somit entfallen nach Fertigstellung des Endprodukts 1 beispielsweise nachfolgende Beschichtungs- bzw. Beaufschlagungsschritte, die - wie zuvor beschrieben - oftmals nicht zu zufriedenstellenden Ergebnissen führen. Insbesondere können hierdurch in bezug auf die erfindungsgemäße Baueinheit 1 starke Umformungen bzw. Biegungen realisiert werden, so daß eine Vielzahl verschiedener Strukturen bzw. Formen, die dem jeweiligen Anforderungsprofil spezifisch angepaßt werden können, realisierbar sind.

Was die Dimensionierung der Schichten anbelangt, so können das Flächenmaterial 6a, 6b und/oder die Trägerschicht 3a, 3b und/oder der Träger 7a, 7b flächenbezogen gleiche Ausmaße aufweisen, so daß die Schichten gewisserma-βen deckungsgleich im Werkstoffteil 8a, 8b angeordnet sind. Dabei kann es vorgesehen sein, daß die Randbereiche der Schichten 6a, 6b; 3a, 3b; 7a, 7b nichtlaminiert sind, so daß das die Randbereiche des Flächenmaterials 6a, 6b und/oder der Trägerschicht 3a, 3b gewissermaßen von dem Träger 7a, 7b ab- bzw. hochklappbar sind. Gemäß einer weiteren erfindungsgemäßen Ausführungsform ist bzw. sind das Flächenmaterial 6a, 6b und/oder die Trägerschicht 3a, 3b flächenbezogen kleiner dimensioniert als der Träger 7a, 7b, so daß sich der Träger 7a, 7b dann gewissermaßen über mindestens einen Rand des Flächenmaterials 6a, 6b und/oder des Trägers 7a, 7b erstreckt. Wie nachfolgend beschrieben, kann ein derartiges erfindungsgemäßes Werkstoffteil 8a, 8b in spezieller Weise umgeformt werden.

Bei dem optionalen, zusätzlichen Träger 7a bzw. 7b handelt es sich vorzugsweise um einen bei Gebrauchstemperatur, insbesondere bei Raumtemperatur (25 °C), und Atmosphärendruck harten Thermoplasten. Somit sollte der Träger 7a bzw. 7b bei Raumtemperatur (25 °C) und Atmosphärendruck zumindest formstabil bzw. selbsttragend sein. Insbesondere sollte der thermoplastische Träger 7a bzw. 7b dergestalt sein, daß nach Durchführung des Umformverfahrens zur Herstellung der erfindungsgemäßen Baueinheit 1 die durch das Flächenmaterial 6a, 6b bzw. die Trägerschicht 3a, 3b gegebenenfalls auftretenden Rückstellkräfte zumindest im wesentlichen nicht zu einer Formveränderung der erfindungsgemäßen Baueinheit 1 bzw. der Formteile 2a, 2b führen.

Der Träger 7a, 7b ist vorzugsweise nichtporös bzw. nichtgeschäumt ausgebildet. Mit anderen Worten ist der Träger 7a, 7b gemäß einer erfindungsgemäß besonders bevorzugten Ausfiihmngsform massiv bzw. als solcher hohlraumfrei. Hierdurch wird - sofern erwünscht - eine besonders gute Formstabilität bzw. mechanische Stabilität der erfindungsgemäßen Baueinheit 1 bzw. der Formteile 2a, 2b erreicht. Gleichermaßen ermöglicht es die nichtporöse Struktur des Trägers 7a bzw. 7b, daß die resultierenden Werkstoffteile 8a bzw. 8b ohne weiteres beispielsweise mittels Thermoformverfahren, wie dem Twin-Sheet-Verfahren, zu den dreidimensionalen Formteilen 2a, 2b bzw. der erfindungsgemäßen Baueinheit 1 umgeformt werden können.

Im Rahmen der vorliegenden Erfindung kann das Material des Trägers 7a bzw. 7b aus Polymeren bzw. Copolymeren ausgewählt sein. Diesbezüglich kommen vorzugsweise Polyolefine, Vinylpolymere, Polyamide, Polyester, Polycarbonate bzw. Polyurethane in Betracht. Gemäß einer erfindungsgemäß bevorzugten Ausführungsform umfaßt das Material des Trägers 7a bzw. 7b Polyolefine, insbesondere Polyethylen oder Polypropylen, besonders bevorzugt Polypropylencopolymerisate, oder aber Acrylnitril/Butadien/Styrol-Copolymerisate (ABS-Copolymerisate). Für weitere Einzelheiten in bezug auf Thermoplaste kann verwiesen werden auf Römpp Chemielexikon, 10. Auflage, Band 6, 1999, Georg Thieme Verlag, Stuttgart/New York, Seiten 4505/4506, Stichwort: "Thermoplaste", wobei der gesamter Offenbarungsgehalt einschließlich der dort genannten Literaturstellen hiermit durch Bezugnahme eingeschlossen ist.

Gleichermaßen können im Rahmen der vorliegenden Erfindung auch sogenannte thermoplastische Elastomere für den Träger 7a bzw. 7b verwendet werden, welche eine Kombination der Gebrauchseigenschaften von Elastomeren und der Verarbeitungseigenschaften von Thermoplasten aufweisen. Für weitere diesbezügliche Einzelheiten kann gleichermaßen verwiesen werden auf Römpp Chemielexikon, 10. Auflage, Band 6, 1999, Georg Thieme Verlag, Stuttgart/New York, Seiten 4506/4507, Stichwort: "Thermoplastische Elastomere", wobei der gesamte Offenbarungsgehalt einschließlich der darin genannten Literaturstellen hiermit durch Bezugnahme eingeschlossen ist.

Erfindungsgemäß werden für den optionalen Träger 7a bzw. 7b besonders bevorzugt solche Materialien bzw. Thermoplaste eingesetzt, welche eine Streckspannung gemäß ISO 527 von 5 bis 10 N/mm², vorzugsweise 10 bis 45 N/mm², bevorzugt 15 bis 40 N/mm², besonders bevorzugt 20 bis 35 N/mm², aufweisen. Gleichermaßen sollte das Material des Trägers 7a bzw. 7b eine Dehnung bei Streckspannung gemäß ISO 527 von weniger als 20 %, vorzugsweise weniger als 16 %, bevorzugt weniger als 12 %, aufweisen. Das Material des Trägers 7a bzw. 7b sollte zudem eine Reißfestigkeit gemäß ISO 527 von mindestens 15 N/mm², vorzugsweise mindestens 20 N/mm², bevorzugt mindestens 25 N/mm², aufweisen und/oder eine Reißdehnung gemäß ISO 527 von 5 bis 700 % und einen Elastizitätsmodul gemäß 4-Punkt-Biegeprüfung nach ISO 178 von 500 bis 2.200 N/mm², vorzugsweise 700 bis 2.100 N/mm², bevorzugt 900 bis 1.900 N/mm², aufweisen.

Was das Material des optionalen Trägers 7a bzw. 7b weiterhin anbelangt, so kann dieses bei 23 °C ohne Bruch schlagzäh (Schlagzähigkeit nach Charpy gemäß EN ISO 179/leU) sein bzw. eine Schlagzähigkeit nach Charpy gemäß EN ISO 179/leU bei -30 °C von mindestens 40 kJ/m², vorzugsweise mindestens 50 kJ/m², bevorzugt mindestens 60 kJ/m², besonders bevorzugt mindestens 70 kJ/m², aufweisen. Weiterhin kann das Material des Trägers 7a bzw. 7b eine Kerbschlagzähigkeit gemäß EN ISO 179/1eA bei 23 °C von mindestens 15 kJ/m², vorzugsweise mindestens 25 kJ/m², bevorzugt mindestens 35 kJ/m², aufweisen. Weiterhin kann das Material des Trägers 7a bzw. 7b eine Kerbschlagzähigkeit gemäß EN ISO 179/1eA bei -30 °C von mindestens 1 kJ/m², vorzugsweise mindestens 2 kJ/m², bevorzugt mindestens 3 kJ/m², aufweisen und weiterhin eine Kugeldruckhärte (H358/30) gemäß EN ISO 2039-1 von mindestens 50 N/mm², vorzugsweise mindestens 60 N/mm², bevorzugt mindestens 70 N/mm², aufweisen. Schließlich sollte das Material des Trägers 7a bzw. 7b eine Dichte von 0,8 bis 1,5 g/cm³, insbesondere 0,85 bis 1,4 g/cm³, vorzugsweise 0,9 bis 1,3 g/cm³, aufweisen. Schließlich sollte das Material des Trägers 7a bzw. 7b eine Vicat-Erweichungstemperatur (VST A 120 bzw. VST B 50) gemäß ISO 306 von 80 °C bis 200 °C, vorzugsweise 85 °C bis 180 °C, bevorzugt 90 °C bis 160 °C, aufweisen.

Für den optionalen Träger 7a bzw. 7b geeignete Materialien sind beispielsweise Metzo®Plast PP/C bzw. Metzo®Plast ABS/M der Metzeler Plastics GmbH, Jülich, Deutschland.

Die Dicke des thermoplastischen Materials bzw. des Trägers 7a, 7b kann in weiten Bereich variieren. Erfindungsgemäß bevorzugt kann der optionale Träger 7a bzw. 7b eine Dicke von 1 mm bis 20 mm, vorzugsweise 1,5 mm bis 5 mm, bevorzugt 2 mm bis 10 mm, besonders bevorzugt 2,5 mm bis 7 mm, ganz besonders bevorzugt 3 mm bis 5 mm, aufweisen. Allerdings kann von diesen Werten anwendungsbezogen oder einzelfallbedingt abgewichen werden, beispielsweise wenn die Formteile 2a bzw. 2b im Rahmen einer erfindungsgemäßen Baueinheit 1 beispielsweise zur Herstellung von besonders belastbaren Möbeln bzw. Sitzmöbeln verwendet werden soll, wobei die Dicke des Trägers dann 15 mm deutlich übersteigen kann.

Was die zuvor angeführten Ausführungen in bezug auf den optionalen Träger 7a bzw. 7b betrifft, so beziehen sich die Angaben jeweils auf den Träger 7a des ersten Formteils 2a bzw. den Träger 7b des zweiten Formteils 2b, wobei die jeweiligen Träger 7a bzw. 7b gleich oder voneinander unterschiedlich ausgebildet sein können.

Wie zuvor angeführt, kann es anwendungsbezogen oder einzelfallbedingt vorgesehen sein, daß eines der Formteile 2a bzw. 2b einschichtig ausgebildet ist und aus lediglich einer Trägerschicht 3a, 3b oder einem Träger 7a, 7b besteht.

In bezug auf die zweischichtige Ausbildung kann das Flächenmaterial 6a, 6b auf eine Trägerschicht 3a, 3b auflaminiert sein. Die Trägerschicht 3a, 3b kann vorzugsweise für diesen Fall ein bei Gebrauchstemperatur, insbesondere bei Raumtemperatur (25 °C) und Atmosphärendruck, harter Thermoplast sein bzw. bei Raumtemperatur (25 °C) und Atmosphärendruck zumindest im wesentlichen formstabil und/oder zumindest im wesentlichen selbsttragend sein bzw. nichtporös und/oder nichtgeschäumt ausgebildet sein. In diesem Zusammenhang kann die Trägerschicht 3a, 3b aus Polymeren und/oder Copolymeren aus der Gruppe von Polyolefinen, Vinylpolymeren, Polyamiden, Polyestern, Polycarbonaten und/oder Polyurethanen, vorzugsweise Polyolefinen, besonders bevorzugt Polypropylencopolymerisaten oder Acrylnitril/Butadien/Styrol-Copolymerisaten (ABS-Copolymerisaten), ausgewählt sein. Mit anderen Worten ist für diesen Fall das Flächenmaterial 6a bzw. 6b ohne eine weitere Schaumstoffschicht gewissermaßen direkt auf eine von den Materialeigenschaften mit dem Träger 7a, 7b vergleichbare Trägerschicht 3a, 3b auflaminiert.

Um die zuvor beschriebenen starken Umformungen bzw. Biegungen hinsichtlich der erfindungsgemäßen Baueinheit 1 realisieren zu können, sollte das Flächenmaterial 6a bzw. 6b im allgemeinen dehnbar bzw. flexibel sein, um eine vorzeitige Delaminierung bzw. Faltenbildung in effektiver Weise zu verhindern. Zu diesem Zweck kann es sich bei dem Flächenmaterial 6a bzw. 6b vorzugsweise um ein textiles Flächenmaterial und insbesondere um ein Gewebe, Gewirke, Gestricke oder Gelege handeln. Gemäß einer erfindungsgemäß besonders bevorzugten Ausführungsform ist das Flächenmaterial 6a bzw. 6b ein Gewebe. Darüber hinaus ist es jedoch gleichermaßen möglich, daß als Flächenmaterial 6a bzw. 6b beispielsweise ein Leder oder ein Kunstleder eingesetzt wird. Gleichermaßen kommen als Flächenmaterial 6a bzw. 6b auch folienartige Kunststoffe und dünnwandige Metallfolien in Betracht. Insbesondere kann das Flächenmaterial 6a bzw. 6b derart ausgewählt sein, daß es zumindest im wesentlichen lichtdicht ist.

Das Flächengewicht des Flächenmaterials 6a bzw. 6b kann in großen Bereichen variieren. So kann das Flächenmaterial 6a bzw. 6b ein Flächengewicht von 25 bis 600 g/m², insbesondere 50 bis 500 g/m², vorzugsweise 100 bis 400 g/m², aufweisen. Zu den vorgenannten Zwecken der Vermeidung einer vorzeitigen Delaminierung bzw. Faltenbildung und zur Ausbildung starker Biegungen bzw. Umformungen in bezug auf die erfindungsgemäße Baueinheit 1 sollte das Flächenmaterial 6a bzw. 6b reversibel dehnfähig und/oder insbesondere bielastisch, d. h. in beiden Richtungen dehnbar, bzw. hochelastisch sein. Dabei kann das Flächenmaterial 6a bzw. 6b eine Dehnbarkeit in mindestens eine Richtung, vorzugsweise in Längs- und Querrichtung, von mindestens 5 %, insbesondere mindestens 10 %, vorzugsweise mindestens 20 %, aufweisen, um den beim Umformen gegebenenfalls auftretenden Längen- und Breitenänderungen ohne Zerreißen folgen zu können.

Gemäß einer erfindungsgemäß besonders bevorzugten Ausführungsform wird als Flächenmaterial 6a bzw. 6b ein insbesondere bielastisches textiles Gewebe eingesetzt, welches beispielsweise eine Elastizität in Kettrichtung von etwa 35 % oder mehr und in Schußrichtung eine Elastizität von 20 % oder mehr aufweist.

Zur Herstellung eines solchen bielastischen Gewebes können beispielhaft und in nichtbeschränkender Weise spezielle elastische Zwirne eingesetzt werden, wie sie beispielsweise in der auf die Anmelderin selbst zurückgehenden EP 0 036 948 A1 beschrieben sind, deren gesamter Offenbarungsinhalt hiermit durch Bezugnahme eingeschlossen ist. Hierbei handelt es sich insbesondere um einen elastischen Zwirn, bei welchem ein Elastomerfaden von etwa 140 bis 200 Denier mit zwei Garnen, deren Stärke jeweils etwa ein Zehntel des Elastomerfadens beträgt, haftend verzwirnt ist, wobei als Garne vorzugsweise im Rotorverfahren hergestellte OE-Garne ("Offenes-Ende-Garne") aus Polyvinylchlorid-, Polycyanid-, Polyacrylnitril- und/oder Wollfäden verwendet werden. Gleichermaßen kann erfindungsgemäß ein bielastisches Gewebe verwendet werden, welches in der ebenfalls auf die Anmelderin selbst zurückgehenden DE 28 57 498 C2 beschrieben ist, deren Inhalt hiermit durch Bezugnahme vollumfänglich eingeschlossen ist.

Gemäß einer besonders bevorzugten Ausführungsform kann ein bielastisches Gewebe verwendet werden, welches ein Gewicht von 350 g/m² bei einer Elastizität in Kettrichtung von 35 % und einer Elastizität in Schußrichtung von 20 % aufweist. Ein derartiges Gewebe kann, bezogen auf das Gesamtgewicht des Gewebes, beispielsweise etwa 4,8 % Elastan®, etwa 89,3 % Polyester und etwa 5,9 % Polyamid umfassen. Erfindungsgemäß ist es gleichermaßen möglich, daß das Flächenmaterial 6a bzw. 6b zusätzlich imprägniert, beschichtet oder dergleichen ist, um das Flächenmaterial 6a bzw. 6b beispielsweise flammhemmend auszurüsten bzw. um die Schmutzabweisung zu erhöhen.

Was die Ausgestaltung des Flächenmaterials 6a des ersten Formteils 2a bzw. des Flächenmaterials 6b des zweiten Formteils 2b anbelangt, so können diese unterschiedlich voneinander sein, d. h. das erste Formteil 2a kann ein von dem zweiten Formteil 2b verschiedenes Flächenmaterial 6a aufweisen, wodurch sich beispielsweise erfindungsgemäße Baueinheiten 1 realisieren lassen, welche in bezug auf die jeweiligen Formteile 2a bzw. 2b unterschiedliche Oberflächeneigenschaften aufweisen. Erfindungsgemäß kann es gleichermaßen vorgesehen sein, daß das Flächenmaterial 6a des ersten Formteils 2a und das Flächenmaterial 6b des zweiten Formteils 2b gleich sind, wodurch eine einheitliche Oberflächenbeschaffenheit resultiert.

Erfindungsgemäß kann das Flächenmaterial 6a bzw. 6b mittels eines Laminier- und/oder Kaschiermittels, insbesondere mittels eines Klebstoffs, auf die Trägerschicht 3a bzw. 3b bzw. auf den Träger 7a bzw. 7b auflaminiert sein. Erfindungsgemäß bevorzugt ist der Klebstoff ein Schmelzklebstoff bzw. ein Schmelzkleberweb. Als Klebstoffe kommen zudem dem Fachmann als solche bekannte Kunststoffdispersionen, aber auch Reaktivklebstoffe, wie insbesondere polyurethanbasierte Ein- oder Zweikomponentensysteme in Frage. Im allgemeinen ist der Klebstoff flächig aufgetragen, so daß beispielsweise eine kontinuierliche Verklebung - insbesondere wie zuvor definiert - resultiert. Gleichermaßen ist im Rahmen der vorliegenden Erfindung auch eine solche flächige Verbindung bzw. Laminierung möglich, bei welcher das Laminier- bzw. Kaschiermittel punkt- bzw. punktrasterförmig bzw. diskontinuierlich aufgetragen ist.

Wie zuvor geschildert, ist es erfindungsgemäß vorgesehen, daß das Flächenmaterial 6a bzw. 6b vorzugsweise auf eine Trägerschicht 3a aufgebracht, vorzugsweise auflaminiert, ist. Zu diesem Zweck kann die Trägerschicht 3a bzw. 3b ein insbesondere thermoplastischer bzw. insbesondere thermoplastisch verformbarer Schaumstoff, vorzugsweise auf Basis von Polyolefinen oder Polyurethanen, sein, wobei Schaumstoffe auf Basis von Polyolefinen erfindungsgemäß bevorzugt sind. Gleichermaßen kann erfindungsgemäß auch ein peroxidisch vernetzbarer Polyethylenschaum eingesetzt werden. Durch die spezielle Auswahl des Schaumstoffs wird das Flächenmaterial 6a bzw. 6b in gewisser Weise unterstützt, so daß die erfindungsgemäße Baueinheit 1 eine gewisse elastische und reversible Komprimierbarkeit bzw. Verformbarkeit unter Belastung aufweist. Was den Schaumstoff betrifft, so kann dieser gleichermaßen plastisch verformbar, insbesondere thermoverformbar bzw. thermoplastisch, sein, wobei die Erweichungstemperatur derart ausgewählt werden sollte, daß der Schaumstoff bei der Umformung des Werkstoffteils 8a bzw. 8b zu dem Formteil 2a bzw. 2b zum Erhalt der erfindungsgemäßen Baueinheit 1 nicht zerstört bzw. der Schaumstoff nicht zu stark komprimiert wird. Der Schaumstoff sollte zumindest derart beschaffen sein, daß er aufgrund seiner Elastizität bzw. Verformbarkeit unter Verwendung des plattenförmigen Werkstoffteils 8a, 8b in die für die erfindungsgemäße Baueinheit 1 gewünschte Form gebracht werden kann.

Die Trägerschicht 3a bzw. 3b, insbesondere die Schaumstoffschicht, kann erfindungsgemäß ein geschlossenporiger bzw. geschlossenzelliger Schaumstoff sein, welcher im allgemeinen eine geringere Komprimierbarkeit als offenporige Schäume aufweist und bei Verwendung der erfindungsgemäßen Baueinheit 1 eine optimale elastische und reversible Komprimierbarkeit unter Belastung aufweist. Beispielsweise liegt - bei Verwendung in Sitzmöbeln - unter Beanspruchung bei einer Belastung ("Draufsetzen") eine Komprimierung des Schaumstoffs vor, so daß aufgrund der guten Anpassung an den Benutzer ein angenehmes und bequemes Sitzgefiihl resultiert, während nach Belastung ("Aufstehen") der Schaumstoff seine ursprüngliche Dicke wieder einzunehmen imstande ist.

Die Trägerschicht 3a bzw. 3b, insbesondere die Schaumstoffschicht, kann eine Dicke von 1 mm bis 50 mm, insbesondere 2 mm bis 40, vorzugsweise 3 mm bis 30 mm, bevorzugt 4 mm bis 25 mm, besonders bevorzugt 5 mm bis 20 mm, aufweisen, wobei die Dicke - in Abhängigkeit von dem gewünschten Einsatzbereich - in weiten Bereichen variieren und gegebenenfalls von den angegebenen Bereichen abweichen kann.

Was die Rohdichte der Trägerschicht 3a bzw. 3b, insbesondere der Schaumstoffschicht, anbelangt, so kann diese 5 bis 250 kg/m³, insbesondere 10 bis 150 kg/m³, vorzugsweise 20 bis 100 kg/m³, bevorzugt 25 bis 95 kg/m³, betragen.

Was die Trägerschicht 3a bzw. 3b anbelangt, so kann es sich hierbei - wie bereits geschildert - um eine Schaumstoffschicht bzw. um eine Schicht aus einem geschäumten Material handeln. Das diesbezüglich verwendete Schaumstoffmaterial kann eine Zugfestigkeit in Quer- und/oder Längsrichtung gemäß ISO 1926 von 100 bis 1.500 kPa, insbesondere 150 bis 1.300 kPa, vorzugsweise 100 bis 1.100 kPa, aufweisen; mit anderen Worten sollte das Material der Trägerschicht 3a bzw. 3b, insbesondere das Schaumstoffmaterial, eine Zugfestigkeit gemäß der vorgenannten Norm in Längs- und/oder Querrichtung von mindestens 100 kPa, insbesondere mindestens 150 kPa, vorzugsweise mindestens 200 kPa, aufweisen.

Weiterhin sollte das Schaumstoffmaterial für die Trägerschicht 3a bzw. 3b eine Bruchdehnung in Längs- bzw. Querrichtung gemäß ISO 1926 von 50 bis 350 %, insbesondere 65 bis 325 %, vorzugsweise 80 bis 300 %, aufweisen; mit anderen Worten sollte das Schaumstoffmaterial für die Trägerschicht 3a bzw. 3b somit eine Bruchdehnung gemäß der vorgenannten Norm in Längs- bzw. Querrichtung von mindestens 50 %, insbesondere mindestens 65 %, vorzugsweise mindestens 80 %, aufweisen. Was die Stauchhärte gemäß ISO 844 des Schaumstoffmaterials für die Trägerschicht 3a bzw. 3b anbelangt, so sollte diese bei einer Stauchung von 10 % mindestens 5 kPa, insbesondere mindestens 10 kPa, vorzugsweise mindestens 15 kPa, bei einer Stauchung von 25 % mindestens 25 kPa, insbesondere mindestens 30 kPa, vorzugsweise mindestens 35.kPa, bei einer Stauchung von 50 % mindestens 85 kPa, insbesondere mindestens 90 kPa, vorzugsweise mindestens 95 kPa, betragen. Was die Druckverformungsresistenz gemäß ISO 1856/C bei einer Belastung von 22 Stunden und einer Stauchung von 25 % bei 23 °C betrifft, so sollte das Schaumstoffmaterial der Trägerschicht 3a bzw. 3b 0,5 Stunden nach Entlastung eine Druckverformungsresistenz von höchstens 30 %, insbesondere höchstens 25 %, vorzugsweise höchstens 20 %, und 24 Stunden nach Entlastung einen Wert von höchstens 20 %, insbesondere höchstens 15 %, vorzugsweise höchstens 10 %, aufweisen. Schließlich sollte das Schaumstoffmaterial für die Trägerschicht 3a bzw. 3b einen µ-Wert gemäß ISO 1663 bei 0 bis 85 % relativer Feuchte und 23 °C von 3.000 bis 20.000, insbesondere 3.500 bis 19.000, vorzugsweise 4.000 bis 18.000, aufweisen.

Erfindungsgemäß bevorzugt können für die Trägerschicht 3a bzw. 3b die unter dem Handelsnamen Alveolit® und Alveolen® vertriebenen Schaumstoffe der Alveo AG, Luzern, Schweiz, eingesetzt werden, welche sich besonders zum Thermoformen und insbesondere zum Vakuumformen (d. h. Vakuumthermoformen) eignen.

Was den von dem ersten Formteil 2a und dem zweiten Formteil 2b umschlossenen bzw. ausgebildeten Hohlraum 4 anbelangt, so kann es vorgesehen sein, daß dieser mit mindestens einem. fluiden oder festen Füllstoff 9 teilweise oder zumindest im wesentlichen vollständig ausgefüllt ist (Fig. 2E bis Fig. 2G). In diesem Zusammenhang kann der Füllstoff 9 ein Fluid, insbesondere ein Gel, wie ein niedrig-, mittel- oder hochviskoses Gel, oder aber ein fester Stoff, wie ein Schaumstoff, sein. Bei dem zur Ausfüllung des Hohlraums 4 verwendeten Schaumstoff kann es sich insbesondere um einen Polystyrol-, Polyurethan- oder Polyolefinschaumstoff oder um einen Mehrkomponentenschaumstoff handeln. Diesbezüglich kommen neben den zuvor genannten geschlossenporigen Schaumstoffen auch offenporige Schaumstoffe in Betracht. Das Aus- bzw. Auffüllen des Hohlraums 4 kann beispielsweise - wie nachfolgend im Rahmen des erfindungsgemäßen Verfahrens noch geschildert - während der Herstellung der erfindungsgemäßen Baueinheit 1 oder nach deren Fertigstellung erfolgen, wobei der Füllstoff 9 vorzugsweise durch die zuvor beschriebenen Durchbrechungen, Kanäle oder dergleichen, insbesondere im Bereich der Unterbrechungen, der ausgebildeten Verbindungsstege zwischen dem ersten Formteils 2a und dem zweiten Formteils 2b in den Hohlraum 4 eingebracht wird. Zudem kann der Füllstoff 9 auch durch nachträgliche Öffnungen, welche beispielsweise mittels Bohren oder dergleichen in die Wandung der erfindungsgemäßen Baueinheit 1 eingebracht werden, in den Hohlraum 4 eingefüllt werden.

Was die erfindungsgemäß verwendbaren Füllstoffe 9 in fester Form, wie die zuvor genannten Schaumstoffe, anbelangt, so können diese beispielsweise in flüssiger, nichtvernetzter Form in den Hohlraum 4 eingebracht werden, wobei eine Vernetzung bzw. Aushärtung gegebenenfalls einschließlich einer Aufschäumung im Hohlraum 4 selbst stattfindet. Hierzu kommen z. B. Mehrkomponentenschäume in Betracht. Gleichermaßen ist es aber auch möglich, daß die festen Füllstoffe 9 in zerkleinerter Form, beispielsweise in Form von Schaumstoffkügelchen, in den Hohlraum 4 eingebracht werden. Durch das Auffüllen des Hohlraums 4 wird insbesondere eine Verringerung der Komprimierbarkeit der erfindungsgemäßen Baueinheit 1 an sich erreicht, wobei aufgrund der Eigenelastizität der verwendeten Materialien eine optimierte ergonomische Anpassung beispielsweise an den Benutzer eines Sitzmöbels erfolgt, so daß beispielsweise bei der Verwendung der erfindungsgemäßen Baueinheit 1 als Sitz- und/oder Rückenteil im Rahmen von Sitzmöbeln eine verbesserte Anpassung an die Körperform resultiert.

Zudem sollten die verwendeten Füllstoffe 9 derart ausgewählt sein, daß bei einer kraftmäßigen Entlastung der erfindungsgemäßen Baueinheit 1 (z. B. "Aufstehen") diese zumindest im wesentlichen ihre ursprüngliche Form bzw. Struktur einzunehmen imstande ist.

Bei der erfindungsgemäßen Baueinheit 1 handelt es sich mit anderen Worten um eine solche Baueinheit 1, welche durch Umformen, insbesondere Thermoformen, bevorzugt Twin-Sheet-Thermoformen, eines ersten, zumindest im wesentlichen plattenförmigen Werkstoffteils 8a zu einem wie zuvor definierten Formteil 2a und eines zweiten, zumindest im wesentlichen plattenförmigen Werkstoffteils 8b zu einem wie zuvor definierten Formteil 2b hergestellt ist. Dabei sind die Formteile 2a bzw. 2b derart miteinander verbunden, daß sie zumindest einen Hohlraum 4 ausbilden. Wie zuvor beschrieben, handelt es sich bei dem zumindest im wesentlichen plattenförmigen Werkstoffteilen 8a, 8b gewissermaßen um die Ausgangsmaterialien zur Herstellung der dreidimensionalen Formteile 2a bzw. 2b, welche wiederum zu der erfindungsgemäßen Baueinheit 1 zusammengefügt werden. Dabei weisen die erfindungsgemäß verwendeten Werkstoffteile 8a bzw. 8b insbesondere denselben Aufbau 5a, 5b wie die daraus hergestellten Formteile 2a bzw. 2b auf. Dabei liegt es im Rahmen der vorliegenden Erfindung, wenn die Werkstoffteile 8a bzw. 8b jeweils voneinander unterschiedliche Schichtaufbauten bzw. Materialien aufweisen. Wie zuvor erwähnt, werden im Rahmen der vorliegenden Erfindung somit bereits zumindest im wesentlichen fertiggestellte, sämtliche Komponenten bzw. Schichten enthaltene Werkstoffteile 8a bzw. 8b verwendet, welche als solche zu Formteilen 2a bzw. 2b umgeformt sind, aus denen die erfindungsgemäße Baueinheit 1 hergestellt ist. Ein nachträgliches Aufbringen von zusätzlichen Schichten entfällt somit erfindungsgemäß vollständig, die Werkstoffteile 8a, 8b werden somit "lediglich" hinsichtlich ihrer Form bzw. Struktur verändert.

Was die erfindungsgemäße Baueinheit betrifft, so liegt diese gewissermaßen in einer für den jeweiligen Anwendungszweck geeigneten Endform vor und kann somit unmittelbar für Einrichtungsgegenstände, wie Möbel (z. B. Sitzmöbel), dekorative Elementen, Hohlraumkanälen und dergleichen, beispielsweise als Formelement einer Unter- bzw. Rückseite eines Sitz- oder Rückenteils oder als vollständige Sitzschale eines Sitzmöbels verwendet werden. Hierzu kann die erfindungsgemäße Baueinheit zusätzlich mit statischen Elementen (d. h. Stützen, Halterungen, Verbindungselementen, Gestänge, Stuhlbeine etc.) ausgerüstet sein. Diesbezüglich können nach erfolgter Umformung Halte- bzw. Fixierpunkte für die vorgenannten Elementen 11, beispielsweise mittels Bohrungen eingebracht sein.

Weiterhin betrifft die vorliegende Erfindung - gemäß einem **zweiten** Aspekt der vorliegenden Erfindung - die Verwendung der erfindungsgemäßen Baueinheit, insbesondere wie zuvor definiert, zur Herstellung von Einrichtungsgegenständen, wie Möbeln, insbesondere Sitzmöbeln, dekorativen Elementen, wie Trennwänden und dergleichen, Hohlraumkanälen und dergleichen. Besonders bevorzugt kann die erfindungsgemäße Baueinheit für Sitzmöbel und dergleichen verwendet werden, wobei der Begriff "Sitzmöbel" sehr breit zu verstehen ist und Sitzgelegenheiten bzw. Sitzelemente aller Art, wie - beispielsweise und in nichtbeschränkender Weise - Bänke, Stühle, Sessel, Sofas, Couchgarnituren, Hocker und dergleichen, betrifft. Dabei kann das Sitzmöbel dergestalt sein, daß es aus einer erfindungsgemäßen Baueinheit besteht oder mindestens eine erfindungsgemäße Baueinheit aufweist. Grundsätzlich können die Einrichtungsgegenstände zu Zwecken einer Innengestaltung gewissermaßen als Interieur sowie zu Zwecken einer Außengestaltung gewisserma-βen als Exterieur eingesetzt werden.

Erfindungsgemäß kann die Baueinheit bestimmte Einheiten bzw. Elemente des Sitzmöbels bilden, wie beispielsweise ein einstückiges Sitz/Rücken-Teil ("Sitzschale"). Alternativ können jeweils zwei unterschiedliche Baueinheiten für ein Sitzteil bzw. ein Rückenteil eines Sitzmöbels verwendet werden. Vorzugsweise ist die Ausgestaltung der erfindungsgemäßen Baueinheit beispielsweise derart, daß das die Vorderseite des Sitz- bzw. Rückenteils bildende Formteil der erfindungsgemäßen Baueinheit vorzugsweise einen zweischichtigen Aufbau mit einem insbesondere textilen Flächenmaterial und einer Trägerschicht aus einem Schaumstoff aufweist, während das die Rückseite des Sitz-/Rücken-Teils bildende Formteil der Baueinheit vorzugsweise einen dreischichtigen Aufbau mit einem massiven thermoplastischen Träger und einer darauf auflaminierten Trägerschicht sowie einem auf die Trägerschicht auflaminierten Flächenmaterial aufweist. Hierdurch ist eine gezielte und zweckgerichtete, differenzierte Kombination von ergonomischen Eigenschaften und Stabilitätseigenschaften möglich (Vorderseite bequem, Rückseite stabil). Erfindungsgemäß bedeutet der Begriff "Vorderseite" die dem Benutzer des Sitzmöbels zugewandte Seite des Sitzmöbels, während der Begriff "Rückseite" sich auf die im Benutzungszustand des Sitzmöbels dem Benutzer abgewandte Seite bezieht.

Darüber hinaus kann die erfindungsgemäße Baueinheit beispielsweise auch für Sättel und dergleichen verwendet werden, insbesondere da die erfindungsgemäße Baueinheit starke Biegungen bzw. ausgeformte Bereiche aufweisen kann, so daß eine exakte Anpassung der aus der erfindungsgemäßen Baueinheit hergestellten Sättel an die Anatomie des Benutzers erfolgen kann. Ein weiterer Anwendungsbereich der erfindungsgemäßen Baueinheit ist beispielsweise dessen Verwendung für Sitzmöbel in öffentlichen Verkehrsmitteln, da aufgrund der zuvor beschriebenen, spezifischen Schichtstruktur mit der flächigen Laminierung eine hohe Schutzresistenz resultiert, da Verschmutzungen nicht tief in das Material eindringen können, und andererseits aufgrund der festen Verklebung der einzelnen Schichten eine hohe Schutzfunktion vor Zerstörung, beispielsweise durch Vandalismus, resultiert, da das flächig auflaminierte, insbesondere textile Flächenmaterial gewissermaßen durch die darunterliegende Schicht stabilisiert ist, so daß es hierdurch eine gewisse Schnittresistenz bzw. Widerstandskraft, z. B. gegen Durchstechen, aufweist.

Zudem kann die erfindungsgemäße Baueinheit als dekoratives Element oder in Form von Hohlraumkanälen, wie Kabelverkleidungen, Abdeckungen und dergleichen verwendet werden.

Gemäß einem weiteren, **dritten** Aspekt der vorliegenden Erfindung betrifft die vorliegende Erfindung gleichermaßen Einrichtungsgegenstände, wie Möbel, dekorative Elemente, Hohlraumkanäle und dergleichen und vorzugsweise Sitzmöbel, welche mindestens eine erfindungsgemäße Baueinheit aufweisen bzw. hieraus bestehen. Aufgrund des spezifischen Aufbaus der erfindungsgemäßen Baueinheit kann diese in bezug auf die Einrichtungsgegenstände, insbesondere Möbel, wie Sitzmöbel, sowohl tragende, stützende und mechanische Funktionen als auch flächenbildende, optische Eigenschaften übernehmen. Dabei weisen die erfindungsgemäßen Einrichtungsgegenstände, insbesondere Möbel, wie Sitzmöbel, gegenüber dem Stand der Technik eine signifikant geringere Anzahl an Einzelkomponenten auf, welche wiederum mit weniger Arbeitsschritten und geringen Werkzeuginvestitionen gefertigt werden können.

Dabei kann die für die Einrichtungsgegenstände, insbesondere Möbel, wie Sitzmöbel, eingesetzte erfindungsgemäße Baueinheit derart ausgebildet sein, daß an deren Rand beispielsweise eine Einbuchtung bzw. Vertiefung zur Aufnahme eines Trägerelements, welches beispielsweise ein entsprechend gebogenes Stahlrohr sein kann, resultiert.

Schließlich ist ein weiterer Gegenstand der vorliegenden Erfindung - gemäß einem **vierten** Aspekt der vorliegenden Erfindung - ein Verfahren zur Herstellung einer Baueinheit 1, insbesondere wie zuvor definiert, bei dem ein erstes, zumindest im wesentlichen plattenförmiges Werkstoffteil 8a mit einer Trägerschicht 3a zu einem ersten Formteil 2a und ein zweites, zumindest im wesentlichen plattenförmiges Werkstoffteil 8b mit einer Trägerschicht 3b zu einem zweiten Formteil 2b umgeformt werden. Das Umformen erfolgt insbesondere mittels Thermoformverfahren und besonders bevorzugt mit dem zuvor beschriebenen Twin-Sheet-Umformverfahren. Dabei werden das erste Formteil 2a und das zweite Formteil 2b derart miteinander verbunden, daß die Formteile 2a bzw. 2b mindestens einen Hohlraum 4 ausbilden. Das erfindungsgemäße Verfahren zeichnet sich dadurch aus, daß die Trägerschicht 3a des ersten Werkstoffteils 8a **vor** und/oder **bei** dem Verfahrensschritt des Umformens mit einem insbesondere textilen Flächenmaterial 6a versehen wird, wobei das Flächenmaterial 6a vor dem Verfahrensschritt des Umformens oder aber während des Verfahrensschritts des Umformens auf die Trägerschicht 3a auflaminiert wird. Darüber hinaus werden die Formteile 2a bzw. 2b derart miteinander verbunden, daß das Flächenmaterial 6a auf der dem Hohlraum 4 abgewandten Seite angeordnet wird. Was das erfindungsgemäß eingesetzte Werkstoffteil 8a bzw. 8b betrifft, so handelt es sich hierbei mit anderen Worten um ein thermoplastisches Halbzeug, das bereits sämtliche Komponenten der Formteile 2a, 2b enthält. Bezüglich des Aufbaus 5a, 5b des Werkstoffteils 8a bzw. 8b, des ersten Formteils 2a sowie des zweiten Formteils 2b sowie der erfindungsgemäßen Baueinheit 1 kann auf die obigen Ausführungen verwiesen werden, welche für das erfindungsgemäße Verfahren entsprechend gelten.

Erfindungsgemäß ist es somit möglich, den Schichtaufbau bzw. den Schichtverbund der Werkstoffteile 8a, 8b vor dem Umformen zu den Formteilen 2a, 2b oder aber während des Umformens auszubilden, d. h. die jeweiligen Schichten 6a, 6b; 3a, 3b; 7a, 7b der Werkstoffteile 8a, 8b werden im letztgenannten Fall während des Umformens insbesondere flächig miteinander verbunden, vorzugsweise laminiert. Dabei werden die Ausdrücke "bei dem Umformen" und "während des Umformens" im Rahmen der vorliegenden Erfindung synonym verwendet.

Somit kann das Flächenmaterial 6a, 6b gemäß einer Ausführungsform des erfindungsgemäßen Verfahrens während des Umformens auf die Trägerschicht 3a, 3b bzw. den Träger 7a, 7b auflaminiert bzw. das Flächenmaterial 6a, 6b auf den Träger 7a, 7b auflaminiert werden. Hierdurch ist das Flächenmaterial 6a, 6b beim Umformen gewissermaßen in bezug auf die Trägerschicht 3a, 3b bzw. den Träger 7a, 7b bzw. die Trägerschicht 3a, 3b an sich in bezug auf den Träger 7a, 7b an dessen Oberfläche frei bewegbar und somit sozusagen auf dem Träger 7a, 7b verschiebbar, so daß die jeweiligen Schichten aufeinander gleiten können. Dabei liegt es im Rahmen der vorliegenden Erfindung, wenn die jeweiligen Schichten 6a, 6b; 3a, 3b; 7a, 7b der Werkstoffteile 8a, 8b über einzelne, insbesondere kreis- oder punktförmige Fixierabschnitte an wenigen Stellen miteinander verbunden, insbesondere vorlaminiert, sind, um eine Delamination vor dem Umformen zu verhindern.

Denn es wurde völlig überraschend gefunden, daß sich besonders gute Umformergebnisse realisieren lassen, wenn während des Formgebungsverfahrens bzw. Umformens die einzelnen Schichten 6a, 6b; 3a, 3b der Werkstoffteile 8a, 8b gewissermaßen frei bewegbar und somit sozusagen auf dem Träger 7a, 7b der Werkstoffteile 8a, 8b frei verschiebbar sind, so daß die jeweiligen Schichten aufeinander gleiten können. Denn hierdurch wird während des Umformens ein "Nachfließen" bzw. "Nachgleiten" des Flächenmaterials 6a, 6b bzw. der Trägerschicht 3a, 3b ermöglicht, wodurch verhindert wird, daß einzelne Schichten, insbesondere das Flächenmaterial 6a, 6b und/oder die Trägerschicht 3a, 3b, beim Umformen einer übermäßigen Beanspruchung durch Dehnen und/oder Stauchen ausgesetzt werden. Auf diese Weise wird einer Faltenbildung, Delamination und/oder einer Rißbildung bzw. einem Zerreißen entgegengewirkt.

Zudem liegt es im Rahmen der vorliegenden Erfindung, wenn der gesamte Schichtverbund 2 oder aber auch einzelne Schichten während des Umformens miteinander verbunden werden. Diesbezüglich können die Schichten zuvor mit einem Laminier- bzw. Kaschiermittel beaufschlagt werden. Gleicherma-βen können einzelne Schichten bereits vor dem Umformen insbesondere mittels Laminierung miteinander verbunden sein (z. B. Flächenmaterial 6a, 6b und Trägerschicht 3a, 3b oder Trägerschicht 3a, 3b und Träger 7a, 7b). Beim Umformen werden die Laminate dann mit der verbleibenden Schicht dauerhaft verbunden, insbesondere laminiert.

Gemäß einer weiteren Ausführungsform können der Träger 7a, 7b, das Flächenmaterial 6a, 6b und gegebenenfalls die Trägerschicht 3a, 3b zumindest teilweise vor Durchführung der Umformung laminiert werden, insbesondere wobei während der Umformung die Umformtemperatur derart ausgewählt wird, daß im Falle eines Laminierens mit einem Laminier- bzw. Kaschiermittel das Laminier- bzw. Kaschiermittel, insbesondere der Klebstoff, vorzugsweise Schmelzklebstoff, besonders bevorzugt das Schmelzkleberweb, in einen flüssigen, insbesondere zähflüssigen, bzw. in einen hitzeklebrigen Zustand gebracht wird. Alternativ können im Falle eines Laminierens ohne Laminier- bzw. Kaschiermittel mindestens eine Oberfläche des Trägers 7a, 7b und/oder des textilen Flächenmaterials 6a, 6b und/oder der Trägerschicht 3a, 3b hitzeklebrig werden, so daß bei dem Umformen die Schichten 6a, 6b; 3a, 3b; 7a, 7b gegeneinander verschiebbar sind. Denn auch bei dieser erfindungsgemäßen Ausführungsform sind die einzelnen Schichten, insbesondere das Flächenmaterial 6a, 6b und/oder die Trägerschicht 3a, 3b in bezug auf den Träger 7a, 7b beim Umformen gewissermaßen frei beweglich und somit sozusagen auf dem Träger 7a, 7b frei verschiebbar, so daß während des Umformens ein "Nachfließen" bzw. "Nachgleiten" des Flächenmaterials 6a, 6b bzw. der Trägerschicht 3a, 3b ermöglicht und einer Faltenbildung, Delamination bzw. einem Reißen entgegengewirkt wird.

Weiterhin wurde völlig überraschend gefunden, daß unter Verwendung eines Werkstoffteils 8a, 8b, bei welchem das Flächenmaterial 6a, 6b und/oder die Trägerschicht 3a, 3b flächenbezogen kleiner dimensioniert als der Träger 7a, 7b ist bzw. sind - so daß sich der Träger 7a, 7b gewissermaßen über mindestens einen Rand des Flächenmaterials 6a, 6b und/oder des Trägers 7a, 7b erstreckt - besonders gute Umformungseigenschaften ergeben. Üblicherweise werden zu Zwecken der Umformung die Werkstoffteils 8a, 8b ein dem Fachmann zu Zwecken der Umformung an sich bekannte(r) Rahmen bzw. Teilformen 10a, 10b zur Aufnahme der Werkstoffteile 8a, 8b verwendet, wobei die Werkstoffteile 8a, 8b insbesondere an dessen Randbereichen von dem Rahmen bzw. den Teilformen 10a, 10b fixiert bzw. eingespannt wird. Überraschenderweise wurde nun gefunden, daß sich besonders gute Ergebnisse hinsichtlich der Umformung der Werkstoffteile 8a, 8b realisieren lassen, wenn das Flächenmaterial 6a, 6b und/oder die Trägerschicht 3a, 3b nicht von den Teilformen 10a, 10b erfaßt bzw. fixiert wird. Dies kann einerseits durch die geringere Dimensionierung des Flächenmaterials 6a, 6b und/oder der Trägerschicht 3a, 3b im Vergleich zu dem Träger 7a, 7b oder aber durch das zuvor beschriebene Nichtlaminieren der Randbereiche des Schichtaufbaus bzw. - verbunds bzw. durch einen geringen Anpreßdruck in bezug auf das Werkstoffteil 8a, 8b realisiert werden. Durch das Nichterfassen der Randbereiche des Flächenmaterials 6a, 6b und/oder der Trägerschicht 3a, 3b wird während des Umformens des Werkstoffteils 1 ein besonders gutes "Nachfließen" bzw. "Nachgleiten" des Flächenmaterials 6a, 6b und/oder der Trägerschicht 3a, 3b erreicht.

Fig. 2 verdeutlicht schematisch den Ablauf der einzelnen Verfahrensschritte des erfindungsgemäßen Verfahrens: Fig. 2A zeigt die verwendeten plattenförmigen Werkstoffteile 8a, 8b, welche gewissermaßen als Ausgangsmaterial zur Herstellung der erfindungsgemäßen Baueinheit 1 fungieren. Dabei weist das erste Werkstoffteil 8a einen zweischichtigen Aufbau 5a mit einer Trägerschicht 3a und einem dieser zugeordneten Flächenmaterial 6a auf, während das zweite plattenförmige Werkstoffteil 8b einen dreischichtigen Aufbau 5b aufweist, welcher einen insbesondere thermoplastischen Träger 7b, eine auf den Träger 7b aufgebrachte Trägerschicht 3b und ein auf die Trägerschicht 3b aufgebrachtes Flächenmaterial 6b umfaßt. Darüber hinaus sind aber auch weitere, von dieser Ausführungsform unterschiedliche Schichtaufbauten möglich, insbesondere wie zuvor definiert sowie in den Ansprüchen 25 bis 27 beschrieben.

Wie zuvor angeführt, wird das erfindungsgemäße Verfahren vorzugsweise unter Verwendung des sogenannten Twin-Sheet-Verfahrens durchgeführt. Kennzeichnend für das Twin-Sheet-Verfahren ist die Möglichkeit, zwei insbesondere thermoplastische, plattenförmige Ausgangsmaterialien gewisserma-βen in einem einzigen Arbeitsschritt gleichzeitig jeweils zu Formkörpern umzuformen und diese gleichzeitig derart miteinander zu verbinden, daß ein Hohlraum 4 resultiert, wobei das Twin-Sheet-Verfahren zu einer im wesentlichen endfertigen Baueinheit 1 führt, welche dann Verwendungen der zuvor genannten Art zugänglich ist.

Was die Anpassung des Twin-Sheet-Verfahrens in bezug auf die erfindungsgemäß verwendeten Werkstoffteile 8a, 8b betrifft, so ist der Fachmann jederzeit in der Lage, die jeweiligen Parameter entsprechend auszuwählen und diese in bezug auf die umzuformenden Werkstoffteile 8a, 8b und in bezug auf die resultierende Baueinheit 1 entsprechend anzupassen.

Das erfindungsgemäße Verfahren zeichnet sich dadurch aus, daß das Flächenmaterial 6a, 6b auf die Trägerschicht 3a, 3b **vor** oder **während** der Durchführung der Verfahrensschritte des Umformens der Werkstoffteile 8a bzw. 8b zu den Formteilen 2a bzw. 2b und deren Zusammenfügen zu der erfindungsgemäßen Baueinheit 1 auflaminiert wird. Mit anderen Worten wird somit ein zumindest im wesentlichen bereits fertiggestelltes Material 8a bzw. 8b mit Schichtstruktur 5a bzw. 5b einem nachfolgenden Umformungsprozeß bzw. -verfahren unterzogen. Somit besitzt das für das Umformen, insbesondere Twin-Sheet-Umformen, verwendete Werkstoffteil 8a bzw. 8b bereits sämtliche Schichten der daraus resultierenden erfindungsgemäßen Baueinheit 1. Durch das Twin-Sheet-Verfahren wird folglich gewissermaßen im wesentlichen "lediglich" die Form bzw. Struktur der Werkstoffteile 8a bzw. 8b verändert und diese derart miteinander zusammengefügt, daß ein Hohlraumkörper 1 resultiert, bzw. der Schichtaufbau der Werkstoffteile 8a, 8b durch Verbinden, insbesondere Laminieren der entsprechenden Schichten 6a, 6b; 3a, 3b; 7a, 7b verfestigt. Durch diese spezielle Maßnahme ist es gerade möglich, starke Biegungen hinsichtlich der resultierenden Baueinheit 1 ohne Delaminierung und ohne Faltenbildung des Flächenmaterials 6a bzw. 6b bzw. der Trägerschicht 3a bzw. 3b herzustellen.

Fig. 2B zeigt das Einbringen der zumindest im wesentlichen parallel angeordneten und geringfügig voneinander beabstandeten Werkstoffteile 8a bzw. 8b in eine aus zwei Teilformen 10a bzw. 10b bestehende Form, wobei die Teilformen 10a, 10b als Positiv- bzw. Negativformen ausgebildet sein können und wobei zu Zwecken der nachfolgenden Umformung bzw. des Zusammenfiigens die Werkstoffteile 8a bzw. 8b gemeinsam oder unabhängig voneinander auf eine Temperatur oberhalb des Erweichungspunktes der Trägerschichten 3a bzw. 3b und/oder des Trägers 7a bzw. 7b erwärmt werden. Das Erwärmen kann beispielsweise mittels Heißluft, Heizstrahler, wie Infrarotstrahler, und dergleichen geschehen. Weiterhin ist es möglich, das Erwärmen vor und/oder während der Umformung zu der Baueinheit 1 durchzuführen. Fig. 2B verdeutlich weiterhin, daß die Werkstoffteile 8a bzw. 8b derart mit den Teilformen 10a bzw. 10b in Kontakt gebracht werden, daß die Werkstoffteile 8a bzw. 8b insbesondere an deren Randbereichen und/oder Stegen der Teilformen 10a bzw. 10b zumindest im wesentlichen luftdicht anliegen. Diese Bereiche bilden nachfolgend gewissermaßen die Stege bzw. Verbindungsstellen der zu der erfindungsgemäßen Baueinheit 1 verbundenen Formteile 2a bzw. 2b. Sofern die Baueinheit 1 nach der Erfindung mehrere Hohlräume 4 aufweist, können die Stege beispielsweise auch in zentralen Bereichen der Werkstoffteile 8a bzw. 8b bzw. der resultierenden Formteile 2a bzw. 2b verlaufen.

Fig. 2C zeigt weiterhin, daß zwischen mindestens eines der Werkstoffteile 8a bzw. 8b und mindestens einer der Teilformen 10a bzw. 10b eine Unterdruckbeaufschlagung durchgeführt wird. Hieraus resultiert, daß mindestens eines der Werkstoffteile 8a bzw. 8b an mindestens eine der Teilformen l0a bzw. 10b angelegt wird, d. h. mit anderen Worten mindestens eines der Werkstoffteile 8a bzw. 8b wird zu einem Formteil 2a bzw. 2b mit dreidimensionaler Form bzw. Struktur umgeformt. Erfindungsgemäß bevorzugt werden beide Werkstoffteile 8a bzw. 8b zu dreidimensionalen Formteilen 2a bzw. 2b umgeformt, wobei die Formgebung gleichzeitig oder nacheinander der Form durchgeführt werden kann. Wie die Fig. 2C gleichermaßen zeigt, ist es möglich, daß zwischen dem ersten Werkstoffteil 8a und dem zweiten Werkstoffteil 8b eine Druckbeaufschlagung, vorzugsweise mittels Luft, durchgeführt wird. Als Folge der Druckbeaufschlagung werden die Werkstoffteile 8a bzw. 8b voneinander beabstandet und gewissermaßen in die Teilformen 10a, 10b zur Ausbildung der Formteile 2a, 2b gedrückt. Der optionale Verfahrensschritt der Druckbeaufschlagung kann gleichzeitig mit der Vakuumbeaufschlagung oder auch unabhängig von dieser erfolgen. Somit ist es erfindungsgemäß möglich, die Verformung entweder durch eine Vakuumbeaufschlagung oder eine Überdruckbeaufschlagung oder deren Kombination durchzuführen.

Wie Fig. 2D zeigt, legen sich die zu den Formteilen 2a bzw. 2b umgebildeten Werkstoffteile 8a bzw. 8b zumindest im wesentlichen vollständig an die Teilformen l0a bzw. 10b an; durch nachfolgendes bzw. gleichzeitiges Aufeinanderdrücken der Teilformen l0a bzw. 10b werden die Formteile 2a bzw. 2b zur Herstellung der erfindungsgemäßen Baueinheit 1 insbesondere abschnittsweise miteinander verbunden. Als Folge resultiert ein durch die Formteile 2a bzw. 2b umschlossener Hohlraum 4. Das Verbinden der Formteile 2a bzw. 2b kann gleichermaßen mittels Laminieren bzw. Kaschieren, insbesondere mittels Verkleben, oder aufgrund der Hitzeklebrigkeit der Formteile 2a bzw. 2b erfolgen. Die Verbindungsstellen der Formteile werden vorzugsweise stegförmig, insbesondere an den Randbereichen der Formteile 2a bzw. 2b, ausgebildet. Als Klebstoffe kommen die zuvor genannten Klebstoffe in Betracht.

Erfindungsgemäß befinden sich die insbesondere textilen Flächenmaterialien 6a, 6b jeweils auf der Außenseite der mittels des erfindungsgemäßen Verfahrens hergestellten Baueinheit 1 nach der Erfindung.

Wie die Fig. 2E weiterhin zeigt, ist es möglich, den Hohlraum 4 mittels der zuvor beschriebenen Füllstoffe 9 auszufüllen, was während oder nach der Umformung bzw. der Verbindung der Formteile 2a bzw. 2b erfolgen kann.

Anschließend wird die Baueinheit 1 vorzugsweise in der Form auf Temperaturen unterhalb des Erweichungspunktes abgekühlt. Anschließend wird die Baueinheit 1 aus der Form entnommen, wie die Fig. 2F zeigt. Diesbezüglich kann es vorgesehen sein, daß zum besseren Ablösen der Baueinheit 1 aus den Teilformen 10a bzw. 10b eine Druckbeaufschlagung zwischen den Teilformen 10a bzw. 10b und der Baueinheit 1, vorzugsweise mittels Luft, erfolgt.

Schließlich kann es vorgesehen sein, daß die Werkstoffteile 8a bzw. 8b und/oder die Baueinheit 1 zusätzlich mit mindestens einem statischen bzw. dekorativen Element 11, beispielsweise einer Profilleiste, aber auch einem Gestänge oder dergleichen, ausgestattet wird, wie es die Fig. 2G zeigt. Das Element 11 kann beispielsweise zur Aufnahme weiterer Elemente (wie beispielsweise Gestelle, Stuhlbeine und dergleichen) fungieren oder als solche ausgebildet sein.

Mit anderen Worten betrifft die vorliegende Erfindung somit ein Verfahren zur Herstellung einer Baueinheit 1, insbesondere zur Herstellung von Möbeln, dekorativen Elementen, Hohlraumkanälen und dergleichen, bei dem ein erstes Werkstoffteil 8a, wie zuvor definiert, und ein zweites Werkstoffteil 8b, wie zuvor definiert, mit an sich bekannten Umformverfahren, insbesondere Thermoformen, bevorzugt Twin-Sheet-Thermoformen, zu einer erfindungsgemä-βen, zuvor definierten Baueinheit 1 umgeformt werden.

Weitere, erfindungsgemäß bevorzugte Ausführungsformen des erfindungsgemäßen Verfahrens zur Herstellung der Baueinheit 1 nach der Erfindung sind Gegenstand der Verfahrensunteransprüche.

Die erfindungsgemäße Baueinheit sowie daraus hergestellte Einrichtungsgegenstände, wie Möbel, sowie das Verfahren zur Herstellung der erfindungsgemäßen Baueinheit weisen zahlreiche Vorteile auf, von denen rein beispielhaft die folgenden genannt werden sollen:
- Aufgrund des speziellen Schichtaufbaus, bei dem die beiden die Baueinheit bildenden Formteile unterschiedlich voneinander ausgebildet sein können, können selbsttragende bzw. belastbare Formen bzw. Strukturen mit hoher ergonomischer Anpassungsfähigkeit geschaffen werden. Durch den Einsatz eines thermoplastischen und vorzugsweise massiven Trägers weist die erfindungsgemäße Baueinheit eine hohe Stabilität aus, so daß sie für zahlreiche Anwendungen anwendbar ist, beispielsweise zur Verwendung in oder als Sitzmöbel. Darüber hinaus kann durch die spezielle Ausgestaltung des anderen Formteils beispielsweise mit einem flexiblen Schaum und einem darauf aufgebrachten Flächenmaterial eine hohe Flexibilität bzw. Anpassungsfähigkeit an anatomische Strukturen erreicht werden, insbesondere wenn der Hohlraum zusätzlich mit einem weiteren Schaummaterial gefüllt ist.
- Durch die individuelle Ausgestaltung der einzelnen Schichten ist eine hohe Variation und Auswahl der jeweiligen Produkteigenschaften möglich - bei gleichzeitig hoher Attraktivität und individueller Gestaltbarkeit der Oberfläche (Stoffbezug).
- Aufgrund des erfindungsgemäßen Prinzips, wonach das insbesondere textile Flächenmaterial auf die Trägerschicht **vor** dem Umformen oder **während** des Umformens auflaminiert wird, wird ein gewissermaßen fertig ausgestaltetes Produkt dem eigentlichen Umformungsprozeß unterzogen, wodurch stark ausgeprägte Umformungen und folglich eine individualisierte Ausgestaltung der Baueinheit realisiert werden können, ohne daß es zu negativen Erscheinungen, wie Delaminierung und Faltenbildung kommt.
- Es können zudem zahlreiche unterschiedliche Formen bzw. Strukturen realisiert werden, so daß die erfindungsgemäße Baueinheit in weiten Bereichen eingesetzt werden kann.
- Die Ausbildung der Schichtstruktur bereits vor oder während der Umformung ermöglicht die vollständige Verbindung aller Schichten in der fertigen Baueinheit, was bei nachträglicher Laminierung im Bereich starker Wölbungen und Biegungen nicht zu realisieren ist.
- Die erhaltenen Baueinheiten sind in hohem Maße beständig gegenüber Verschmutzungen und Beschädigungen, so daß sie sich insbesondere zur Verwendung in oder als Sitzeinheiten, z. B. in öffentlichen Verkehrsmitteln eigenen.
- Die Herstellung der erfindungsgemäßen Baueinheit umfaßt eine geringe Anzahl an Verfahrensschritten unter einem minimierten Werkzeugaufwand, so daß es sich um ein äußerst kostengünstiges Herstellungsverfahren handelt.
- Mit Hilfe des erfindungsgemäßen Verfahrens können vollständige Einheiten eines Möbels, beispielsweise ein Sitz-/Rückenteil eines Sitzmöbels mit einer geringen Anzahl an Arbeitsschritten zum Erhalt der gewünschten Endform hergestellt werden.
- Durch den optional vorgesehenen, massiven thermoplastischen Träger weist die erfindungsgemäße Baueinheit nach Verformung selbsttragende Funktionen auf, was ihr eine hohe Bedeutung insbesondere in bezug auf Sitzsysteme zukommen läßt.
- Da während der Verformung der Werkstoffteile zwischen den Werkstoffteilen mindestens ein Hohlraum entsteht, kann dieser mit einem oder mehreren Schäumen mit spezifischen Eigenschaften befüllt werden, wodurch die Eigenschaften der resultierenden Baueinheit weiter optimiert werden können.
- Erfindungsgemäß ist es möglich, die Werkstoffteile vor oder während des Verformungsschrittes z. B. mit einem zusätzlichen statischen Traversenrahmen zur Aufnahme beispielsweise von Stuhlbeinen oder dergleichen oder mit abhängigen Funktionselementen (beispielsweise zwischen einem Sitz- und Rückenteil) auszustatten.
- Die verfahrenstechnisch bedingten Verbindungsstellen bzw. Ränder, die aufgrund der Verbindung der Formteile resultieren, können konstruktionsunterstützend z. B. für die Aufnahme in einem den Anforderungen entsprechenden formschlüssigen Sitzrahmenprofil genutzt werden.

Weitere Ausgestaltungen, Abwandlungen und Variationen der vorliegenden Erfindung sind für den Fachmann beim Lesen der Beschreibung ohne weiteres erkennbar und realisierbar ohne das er dabei den Rahmen der vorliegenden Erfindung verläßt. Die vorliegende Erfindung wird nachfolgend anhand eines Ausführungsbeispiels veranschaulicht, welches aber die vorliegende Erfindung keinesfalls beschränken soll.

### Ausführungsbeispiel:

Zur Herstellung eines Sitz- und/oder Rückenteils eines Sitzmöbels wird ein thermisch verformbarer Schaumstoff eines plattenförmigen Werkstoffteils mit einer textilen Oberfläche ausgerüstet. Weiterhin wird ein zweites plattenförmiges Werkstoffteil, welches die Unterseite des Sitz- und/oder Rückenteils bildet, mit einer textilen Oberfläche, einem thermisch verformbaren Schaumstoff und einem massiven thermoplastischen Träger ausgerüstet und jeweils auf die entsprechende Verformungstemperatur erwärmt. Anschließend werden die Werkstoffteile zwischen einer Oberseitenform und einer Unterseitenform für das Sitz- und/oder Rückenteil positioniert. Anschließend wird mittels Unterdruck zwischen den Formen einerseits und den Werkstoffteilen andererseits und Überdruck zwischen den Werkstoffteilen die Werkstoffteile der Oberseite und der Unterseite in die Endform des Sitz- und/oder Rückenteils gebracht. In einem anschließenden Arbeitsschritt erfolgt die Befüllung der zwischen den Werkstoff- bzw. Formteilen entstandenen Hohlräume des Sitz- und/oder Rükkenteils. Hierzu kann beispielsweise ein Mehrkomponentenschaum eingesetzt werden. Nach Ausformen der Endform des Sitz- und/oder Rückenteils aus der Oberseitenform und der Unterseitenform wird ein Traversenprofil an den die Verbindung zwischen den Werkstoffteilen darstellenden Rand des Sitz- und/oder Rückenteils befestigt. Das erhaltene Sitz- und/oder Rückenteil kann beispielsweise mit einer Gestellkonstruktion zum Erhalt eines Sitzmöbels verbunden werden.

## Patentansprüche

1. Baueinheit (1), insbesondere für die Herstellung von Möbeln, dekorativen Elementen, Hohlraumkanälen und dergleichen, wobei die Baueinheit (1) ein erstes Formteil (2a) mit einer Trägerschicht (3a) und ein zweites Formteil (2b) mit einer Trägerschicht (3b) umfaßt, wobei das erste Formteil (2a) und das zweite Formteil (2b) mindestens einen Hohlraum (4) ausbilden,
**dadurch gekennzeichnet,**
**daß** das erste Formteil (2a) einen mehrschichtigen Aufbau (5a) aufweist, wobei das erste Formteil (2a) ein der Trägerschicht (3a) zugeordnetes, insbesondere textiles Flächenmaterial (6a) aufweist, wobei das Flächenmaterial (6a) auf der dem Hohlraum (4) abgewandten Seite der Trägerschicht (3a) auf die Trägerschicht (3a) auflaminiert ist.

2. Baueinheit nach Anspruch 1, **dadurch gekennzeichnet, daß** mindestens eines der Formteile (2a, 2b), vorzugsweise beide Formteile (2a, 2b), eine dreidimensionale Form bzw. Struktur aufweisen und/oder daß die Formteile (2a, 2b) insbesondere abschnittsweise miteinander verbunden sind.

3. Baueinheit nach einem oder mehreren der vorangehenden Ansprüche, **dadurch gekennzeichnet, daß** das erste Formteil (2a) zusätzlich einen insbesondere thermoplastischen Träger (7a) aufweist, insbesondere wobei der Träger (7a) vorzugsweise auf der dem Hohlraum (4) zugewandten Seite mit der Trägerschicht (3a) verbunden, insbesondere flächig verbunden, ist.

4. Baueinheit nach einem oder mehreren der vorangehenden Ansprüche, **dadurch gekennzeichnet, daß** auch das zweite Formteil (2b) einen mehrschichtigen Aufbau (5b) aufweist, insbesondere wobei das zweite Formteil (2b) ein der Trägerschicht (3b) zugeordnetes, insbesondere textiles Flächenmaterial (6b) aufweist, wobei das Flächenmaterial (6b) auf der dem Hohlraum (4) abgewandten Seite der Trägerschicht (3b) auf die Trägerschicht (3b) auflaminiert ist und/oder insbesondere wobei das zweite Formteil (2b) zusätzlich einen insbesondere thermoplastischen Träger (7b) aufweist, insbesondere wobei der Träger (7b) vorzugsweise auf der dem Hohlraum (4) zugewandten Seite mit der Trägerschicht (3b) verbunden, insbesondere flächig verbunden, ist.

5. Baueinheit nach einem oder mehreren der vorangehenden Ansprüche, **dadurch gekennzeichnet, daß** das Flächenmaterial (6a, 6b) ein textiles Flächenmaterial ist, insbesondere wobei das Flächenmaterial (6a, 6b) ein Gewebe, Gewirke, Gestricke oder Gelege, vorzugsweise ein Gewebe, ist und/oder daß das Flächenmaterial (6a, 6b) ein Flächengewicht von 25 bis 600 g/m², insbesondere 50 bis 500 g/m², vorzugsweise 100 bis 400 g/m², aufweist.

6. Baueinheit nach einem oder mehreren der vorangehenden Ansprüche, **dadurch gekennzeichnet, daß** die Trägerschicht (3a, 3b) ein insbesondere thermoplastischer Schaumstoff auf Basis von Polyolefinen oder Polyurethanen, vorzugsweise Polyolefinen, ist, insbesondere wobei die Trägerschicht (3a, 3b), insbesondere Schaumstoffschicht, ein geschlossenporiger und/oder geschlossenzelliger Schaumstoff ist.

7. Baueinheit nach einem oder mehreren der vorangehenden Ansprüche, **dadurch gekennzeichnet, daß** der Hohlraum (4) mit mindestens einem fluiden oder festen Füllstoff (9) teilweise oder zumindest im wesentlichen vollständig ausgefüllt ist, insbesondere wobei der Füllstoff (9) ausgewählt ist aus der Gruppe von Gelen, insbesondere niedrigviskosen, mittelviskosen oder hochviskosen Gelen, und festen Stoffen, wie Schaumstoffen, insbesondere Polystyrol-, Polyurethan- oder Polyolefinschaumstoffen.

8. Baueinheit (1), insbesondere für die Herstellung von Möbeln, dekorativen Elementen, Hohlraumkanälen und dergleichen, hergestellt durch Umformen, insbesondere Thermoformen, bevorzugt Twin-Sheet-Thermoformen, eines ersten, zumindest im wesentlichen plattenförmigen Werkstoffteils (8a) zu einem ersten Formteil (2a), insbesondere wie in den Ansprüchen 1 bis 6 definiert, und eines zweiten, zumindest im wesentlichen plattenförmigen Werkstoffteils (8b) zu einem zweiten Formteil (2b), insbesondere wie in den Ansprüchen 1 bis 6 definiert, insbesondere wobei die Formteile (2a, 2b) derart verbunden, insbesondere abschnittsweise verbunden, sind, daß die Formteile (2a, 2b) zumindest einen Hohlraum (4) ausbilden.

9. Baueinheit nach Anspruch 8, **dadurch gekennzeichnet, daß** die Werkstoffteile (8a, 8b) jeweils denselben Aufbau (5a, 5b), insbesondere Schichtaufbau, wie die jeweiligen Formteile (2a, 2b) aufweisen und/oder daß das Flächenmaterial (6a) und/oder der Träger (7a) vor und/oder bei dem Umformen des ersten Werkstoffteils (8a) zu dem ersten Formteil (2a) auf die Trägerschicht (3a) auflaminiert ist und/oder daß das Flächenmaterial (6b) und/oder der Träger (7b) vor und/oder bei dem Umformen des zweiten Werkstoffteils (8b) zu dem zweiten Formteil (2b) auf die Trägerschicht (3b) auflaminiert ist.

10. Baueinheit (1), insbesondere für die Herstellung von Möbeln, dekorativen Elementen, Hohlraumkanälen und dergleichen, wobei die Baueinheit (1) eine dreidimensionale Form bzw. Struktur, insbesondere Wölbungen, Vertiefungen, Ausbuchtungen, Biegungen oder dergleichen, aufweist, wobei die Baueinheit (1) ein erstes Formteil (2a) mit einer Trägerschicht (3a) und ein zweites Formteil (2b) mit einer Trägerschicht (3b) umfaßt, wobei das erste Formteil (2a) und das zweite Formteil (2b) mindestens einen Hohlraum (4) ausbilden, wobei das erste Formteil (2a) einen mehrschichtigen Aufbau (5a) aufweist, wobei das erste Formteil (2a) ein der Trägerschicht (3a) zugeordnetes, insbesondere textiles Flächenmaterial (6a) aufweist und das Flächenmaterial (6a) auf der dem Hohlraum (4) abgewandten Seite der Trägerschicht (3a) auf die Trägerschicht (3a) auflaminiert ist.

11. Verwendung einer Baueinheit nach einem der Ansprüche 1 bis 7 zur Herstellung von Einrichtungsgegenständen, insbesondere Möbeln, vorzugsweise Sitzmöbeln, dekorativen Elementen, Hohlraumkanälen und dergleichen.

12. Einrichtungsgegenstände, insbesondere Möbel, vorzugsweise Sitzmöbel, dekorative Elemente, Hohlraumkanäle und dergleichen, aufweisend mindestens eine Baueinheit (1) nach einem der Ansprüche 1 bis 7 und/oder hergestellt unter Verwendung einer Baueinheit nach einem der Ansprüche 1 bis 7.

13. Verfahren zur Herstellung einer Baueinheit (1) nach einem der Ansprüche 1 bis 7, bei dem ein erstes, zumindest im wesentlichen plattenförmiges Werkstoffteil (8a) mit einer Trägerschicht (3a) zu einem ersten Formteil (2a) und ein zweites, zumindest im wesentlichen plattenförmiges Werkstoffteil (8b) mit einer Trägerschicht (3b) zu einem zweiten Formteil (2b) umgeformt, insbesondere thermogeformt, werden und das erste Formteil (2a) und das zweite Formteil (2b) derart miteinander verbunden werden, daß die Formteile (2a, 2b) mindestens einen Hohlraum (4) ausbilden,
**dadurch gekennzeichnet,**
**daß** die Trägerschicht (3a) des ersten Werkstoffteils (8a) vor und/oder bei dem Verfahrensschritt des Umformens mit einem insbesondere textilen Flächenmaterial (6a) versehen wird, wobei das Flächenmaterial (6a) vor dem Verfahrensschritt des Umformens oder aber während des Verfahrensschritts des Umformens auf die Trägerschicht (3a) auflaminiert wird, und
**daß** die Formteile (2a, 2b) derart miteinander verbunden, insbesondere abschnittsweise verbunden, werden, daß das Flächenmaterial (6a) auf der dem Hohlraum (4) abgewandten Seite angeordnet wird.

14. Verfahren nach Anspruch 13, **dadurch gekennzeichnet, daß** auf die Trägerschicht (3a) des Werkstoffteils (8a) vor und/oder bei dem Verfahrensschritt des Umformens ein insbesondere thermoplastischer Träger (7a) aufgebracht wird, insbesondere wobei der Träger (7a) vorzugsweise auf der dem Hohlraum (4) zugewandten Seite mit der Trägerschicht (3a) insbesondere flächig verbunden wird und/oder daß das Flächenmaterial (6a) und/oder der Träger (7a) während des Verfahrensschritts des Umformens auf die Trägerschicht (3a) insbesondere flächig auflaminiert wird/werden und/oder daß das Flächenmaterial (6a) und/oder der Träger (7a) mittels eines Laminier- bzw. Kaschiermittels, insbesondere eines Klebstoffs, vorzugsweise eines Schmelzklebstoffs, auf die Trägerschicht (3a) insbesondere flächig auflaminiert wird/werden.

15. Verfahren nach einem der Ansprüche 13 oder 14, **dadurch gekennzeichnet, daß** die Trägerschicht (3a), das Flächenmaterial (6a) und gegebenenfalls der Träger (7a) zumindest teilweise vor dem Verfahrensschritt des Umformens laminiert werden, insbesondere wobei während des Umformens die Umformtemperatur derart ausgewählt wird, daß im Falle eines Laminierens mit einem Laminier- bzw. Kaschiermittel das Laminier- bzw. Kaschiermittel, insbesondere der Klebstoff, vorzugsweise Schmelzklebstoff, besonders bevorzugt das Schmelzkleberweb, in einen flüssigen, insbesondere zähflüssigen, und/oder hitzeklebrigen Zustand gebracht wird und/oder daß im Falle eines Laminierens ohne Laminier- bzw. Kaschiermittel mindestens eine Oberfläche der Trägerschicht (3a) und/oder des Flächenmaterial (6a) und/oder gegebenenfalls des Trägers (7a) hitzeklebrig werden, so daß bei dem Verfahrensschritt des Umformens die Schichten (3a, 6a, 7a) gegeneinander verschiebbar sind.

16. Verfahren nach einem der Ansprüche 13 bis 15, **dadurch gekennzeichnet, daß** das Werkstoffteil (8b) mit einem mehrschichtigen Aufbau (5b) ausgestattet wird, insbesondere wobei vor und/oder bei dem Verfahrensschritt des Umformens ein insbesondere textiles Flächenmaterial (6b) der Trägerschicht (3b) zugeordnet wird, wobei das Flächenmaterial (6b) vor und/oder bei dem Verfahrensschritt des Umformens auf der dem Hohlraum (4) abgewandten Seite der Trägerschicht (3b) auf die Trägerschicht (3b) auflaminiert wird und/oder daß das Werkstoffteil (8b) vor und/oder bei dem Verfahrensschritt des Umformens mit einem insbesondere thermoplastischen Träger (7b) ausgestattet wird, insbesondere wobei der Träger (7b) vor und/oder bei dem Verfahrensschritt des Umformens vorzugsweise auf der dem Hohlraum (4) zugewandten Seite mit der Trägerschicht (3b) insbesondere flächig verbunden wird.

17. Verfahren nach Anspruch 16, **dadurch gekennzeichnet, daß** das Flächenmaterial (6b) und/oder der Träger (7b) während des Verfahrensschritts des Umformens auf die Trägerschicht (3b) insbesondere flächig auflaminiert wird/werden und/oder daß das Flächenmaterial (6b) und/oder der Träger (7b) mittels eines Laminier- bzw. Kaschiermittels, insbesondere eines Klebstoffs, vorzugsweise eines Schmelzklebstoffs, auf die Trägerschicht (3b) insbesondere flächig auflaminiert wird/werden und/oder daß die Trägerschicht (3b), das Flächenmaterial (6b) und gegebenenfalls der Träger (7b) zumindest teilweise vor dem Verfahrensschritt des Umformens laminiert werden, insbesondere wobei während des Umformens die Umformtemperatur derart ausgewählt wird, daß im Falle eines Laminierens mit einem Laminier- bzw. Kaschiermittel das Laminier- bzw. Kaschiermittel, insbesondere der Klebstoff, vorzugsweise Schmelzklebstoff, besonders bevorzugt das Schmelzkleberweb, in einen flüssigen, insbesondere zähflüssigen, und/oder hitzeklebrigen Zustand gebracht wird und/oder daß im Falle eines Laminierens ohne Laminier- bzw. Kaschiermittel mindestens eine Oberfläche der Trägerschicht (3b) und/oder des Flächenmaterial (6b) und/oder gegebenenfalls des Trägers (7a) hitzeklebrig werden, so daß bei dem Verfahrensschritt des Umformens die Schichten (3b, 6b, 7b) gegeneinander verschiebbar sind.

18. Verfahren nach einem der Ansprüche 13 bis 17, **dadurch gekennzeichnet, daß** die Werkstoffteile (8a, 8b) gemeinsam oder unabhängig voneinander auf eine Temperatur oberhalb des Erweichungspunktes der Trägerschichten (3a, 3b) und/oder des Trägers (7a, 7b) erwärmt werden.

19. Verfahren nach einem der Ansprüche 13 bis 18, **dadurch gekennzeichnet, daß** die Werkstoffteile (8a, 8b) vorzugsweise in paralleler Ausrichtung in eine vorzugsweise aus zwei Teilformen (10a, 10b) bestehende Form überführt werden.

20. Verfahren nach Anspruch 19, **dadurch gekennzeichnet, daß** die Werkstoffteile (8a, 8b) derart mit den Teilformen (10a, 10b) in Kontakt gebracht werden, daß die Werkstoffteile (8a, 8b) an Randbereichen und/oder Stegen der Teilformen (10a, 10b) zumindest im wesentlichen luftdicht anliegen und/oder daß zwischen mindestens eines der Werkstoffteile (8a, 8b) und mindestens einer der Teilformen (10a, 10b) eine Unterdruckbeaufschlagung durchgeführt wird, so daß mindestens eines der Werkstoffteile (8a, 8b) an mindestens einer der Teilformen (10a, 10b) angeformt wird, insbesondere wobei mindestens eines der Werkstoffteile (8a, 8b) derart umgeformt wird, daß mindestens ein resultierendes Formteil (2a, 2b), vorzugsweise beide Formteile (2a, 2b), eine dreidimensionale Form bzw. Struktur aufweist bzw. aufweisen und/oder daß zwischen dem ersten Werkstoffteil (8a) und dem zweiten Werkstoffteil (8b) eine Druckbeaufschlagung, vorzugsweise mittels Luft, durchgeführt wird, insbesondere wobei die Werkstoffteile (8a, 8b) voneinander beabstandet werden und in die Teilformen (10a, 10b) gedrückt werden.

21. Verfahren nach Anspruch 19 oder 20, **dadurch gekennzeichnet, daß** die Formteile (2a, 2b) zur Herstellung der Baueinheit (1) insbesondere abschnittsweise miteinander verbunden werden, insbesondere wobei der Hohlraum (4) durch die Formteile (2a, 2b) umschlossen wird und/oder daß die Baueinheit (1) vorzugsweise in der Form auf Temperaturen unterhalb des Erweichungspunktes der Trägerschicht (3a, 3b) und/ oder des Trägers (7a,7 b) abgekühlt wird und anschließend aus der Form entnommen wird und/oder daß nach Herstellung der Baueinheit (1) und Abkühlung der Baueinheit (1) auf Temperaturen unterhalb des Erweichungspunktes der Trägerschicht (3a, 3b) zwischen der Baueinheit (1) und den Teilformen (10a, 10b) eine Druckbeaufschlagung, vorzugsweise mittels Luft, erfolgt.

22. Verfahren nach einem der Ansprüche 19 bis 21, **dadurch gekennzeichnet, daß** der Hohlraum (4) während oder nach der Herstellung der Baueinheit (1) mit mindestens einem Füllstoff (9), insbesondere wie in Anspruch 7 definiert, teilweise oder zumindest im wesentlichen vollständig aufgefüllt wird und/oder daß das Umformen zur Herstellung der Baueinheit (1) mittels Thermoformen, insbesondere Twin-Sheet-Thermoformen, durchgeführt wird und/oder daß die Werkstoffteile (8a, 8b) und/oder die Baueinheit (1) zusätzlich mit mindestens einem statischen und/oder dekorativen Element (11) ausgestattet wird.

23. Verfahren zur Herstellung einer Baueinheit (1), insbesondere für die Herstellung von Möbeln, dekorativen Elementen, Hohlraumkanälen und dergleichen,
**dadurch gekennzeichnet,**
**daß** ein erstes Werkstoffteil (8a), wie zuvor definiert, und ein zweites Werkstoffteil (8b), wie zuvor definiert, mit an sich bekannten Umformverfahren, insbesondere Thermoformen, bevorzugt Twin-Sheet-verfahren, insbesondere Thermoformen, bevorzugt Twin-Sheet-Thermoformen, zu einer Baueinheit nach einem der Ansprüche 1 bis 7 umgeformt werden.
